(19) Europäisches Patentamt
European Patent Office
Office européen des brevets

(11) **EP 4 773 396 A1**

(12) **EUROPEAN PATENT APPLICATION**
published in accordance with Art. 153(4) EPC

(43) Date of publication:
08.07.2026 Bulletin 2026/28

(21) Application number: 23952666.8

(22) Date of filing: 21.09.2023

(51) International Patent Classification (IPC):
*H01M 50/471* (2021.01)     *H01M 50/489* (2021.01)
*H01M 10/04* (2006.01)

(52) Cooperative Patent Classification (CPC):
H01M 10/04; H01M 50/471; H01M 50/489;
Y02E 60/10

(86) International application number:
PCT/CN2023/120510

(87) International publication number:
WO 2025/060010 (27.03.2025 Gazette 2025/13)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: Contemporary Amperex Technology
Co., Limited
Ningde, Fujian 352100 (CN)

(72) Inventors:
• LIN, Chenhui
Ningde, Fujian 352100 (CN)
• HE, Jianfu
Ningde, Fujian 352100 (CN)
• YE, Yonghuang
Ningde, Fujian 352100 (CN)
• JIN, Haizu
Ningde, Fujian 352100 (CN)

(74) Representative: Gong, Jinping
CocreateIP
Neumarkter Straße 21
81673 München (DE)

(54) **BATTERY CELL, BATTERY AND ELECTRICAL APPARATUS**

(57) Disclosed in the present application are a battery cell, a battery and an electrical apparatus. The battery cell comprises a casing; at least one electrode component, the electrode component being arranged inside the casing; and at least one elastic buffer pad, the elastic buffer pad being arranged on at least part of the surface of the electrode component and/or inside the electrode component, the compression ratio of the elastic buffer pad in the thickness direction satisfying the following relationship: $-5\% \leq P \leq 5\%$, the compression ratio of the elastic buffer pad under the pressure of 0.1 MPa being $\leq 20\%$, and the compression ratio thereof under the pressure of 0.5 MPa being $\leq 60\%$, or $P > 5\%$, and the compression ratio of the elastic buffer pad under the pressure of 0.5 MPa being $\geq 50\%$, the at least one electrode component and the at least one elastic buffer pad being stacked in a first direction, and P being a ratio of a difference between the total distance of the electrode component in a fully-charged state and the total distance thereof in a fully-discharged state to the distance between the inner wall surfaces of the casing in the first direction.

FIG. 1

**Description**

TECHNICAL FIELD

The present application belongs to the field of battery technologies, and in particular, relating to a battery cell, a battery, and an electrical apparatus.

BACKGROUND

Batteries, as energy storage apparatuses, are widely used in various fields. Lithium ion batteries are used as an example. The lithium ion batteries that feature greenness, environmental-friendliness, high energy, low carbon, and the like are not only used in energy storage power systems such as hydropower, thermal power, wind power, and solar power plants, but also widely used in electric tools such as electric bicycles, electric motorcycles, electric vehicles, and ships, as well as military equipment, aerospace, and many other fields. With the development of the current society, the demand for the batteries is increasingly high.

SUMMARY

In view of the technical problems in the background, the present application provides a battery cell, aiming to improve effectiveness of a buffer pad and reduce the risk of expansion and deformation or performance deterioration of the battery cell.

To achieve the foregoing objectives, a first aspect of the present application provides a battery cell, comprising:

a casing;

at least one electrode component, the electrode component being arranged inside the casing; and

at least one elastic buffer pad, the elastic buffer pad being disposed on at least part of a surface of the electrode component and/or inside the electrode component, and the compression ratio of the elastic buffer pad in the thickness direction thereof satisfying the following relationship:

-5%≤P≤5%, the compression ratio of the elastic buffer pad under a pressure of 0.1 MPa being ≤ 20%, and the compression ratio thereof under a pressure of 0.5 MPa being ≤ 60%; or

P>5%, the compression ratio of the elastic buffer pad under a pressure of 0.5 MPa being ≥ 50%; and

the at least one electrode component and the at least one elastic buffer pad being stacked in a first direction, and P being a ratio of a difference between a total distance of the electrode component in a fully-charged state and a total distance of the electrode component in a fully-discharged state to a distance between the inner wall surfaces of the casing in the first direction.

The battery cell according to the first aspect of the present application has the following beneficial effects: The battery cell is applicable to different expansion systems, and for a low expansion system (-5%≤P≤5%), a volume deformation of the electrode component during charging and discharging is relatively small. By selecting an elastic buffer pad with the compression ratio in the thickness direction thereof satisfying a given condition, not only can a volume expansion force generated by the electrode component during charging and discharging be buffered to suppress deformation of the battery cell, but also the elastic buffer pad can be enabled to have certain support strength. In a state in which the elastic buffer pad is not excessively compressed, it is also beneficial to implement direct attachment of the electrode component to an inner wall of the casing or attachment of the electrode component to the inner wall of the casing through the elastic buffer pad to achieve interaction force, thereby not only helping to improve uniformity of stress distribution on an electrode sheet, but also helping to suppress shaking of the electrode component. Whereas, for a high expansion system (P>5%), a volume deformation of the electrode component during charging and discharging is relatively large. By selecting an elastic buffer pad with the compression ratio in the thickness direction thereof satisfying a given condition, the elastic buffer pad can be fully compressed during expansion of the electrode component, and space in the thickness direction of the elastic buffer pad is vacated to the electrode component, thereby reducing an expansion force of the electrode component. Therefore, for battery cells with different expansion systems, it is beneficial to enable the elastic buffer pad to exert a relatively good effect, improve volume stability of the battery cell during long-term use, reduce the risk of expansion and deformation or performance deterioration of the battery cell, and improve long-term use performance.

In some implementations of the present application, the elastic buffer pad is disposed between the electrode component and the casing, and/or the elastic buffer pad is disposed between two adjacent electrode components. Satisfying the given condition is beneficial to improving volume stability of the battery cell during long-term use.

In some implementations of the present application, when -5%≤P≤5%, the compression ratio of the elastic buffer pad under the pressure of 0.1 MPa is ≤ 15%, optionally ≤ 10%, and/or the compression ratio of the elastic buffer pad under the pressure of 0.5 MPa is ≤ 55%, optionally ≤ 50%. Satisfying the given condition is not only beneficial to improving volume stability of a battery cell with a low expansion system during long-term use, but also beneficial to improving uniformity of stress distribution on an electrode sheet and reducing the risk of expansion and deformation or performance deterioration of the battery cell.

In some implementations of the present application, when P>5%, the compression ratio of the elastic buffer pad under the pressure of 0.5 MPa is ≥ 60%, optionally ≥ 70%. Satisfying the given condition is further beneficial to reducing an expansion force generated by the electrode component on the casing in a battery cell with a high expansion system, and improving volume stability of the battery cell during long-term use.

In some implementations of the present application, the electrode component is a wound electrode component and comprises a straight part and a corner part, and the elastic buffer pad is disposed on at least part of the surface of the straight part and/or the corner part.

In some implementations of the present application, the battery cell is a prismatic battery cell.

In some implementations of the present application, the prismatic battery cell comprises: at least one first elastic buffer pad and/or at least one second elastic buffer pad, the first elastic buffer pad and the electrode component being stacked in the thickness direction of the battery cell, and/or the second elastic buffer pad and the electrode component being stacked in the length direction of the battery cell. Satisfying the given condition is beneficial to reducing the expansion force generated by the electrode component during use.

In some implementations of the present application, the prismatic battery cell satisfies at least one of the following conditions: in the thickness direction of the battery cell, a sum of a total thickness of the first elastic buffer pad in a free state and a total thickness of the electrode component in a fully-discharged state is 80% to 99% of the distance between the inner wall surfaces of the casing, optionally 85% to 98%, and further optionally 90% to 95%; in the thickness direction of the battery cell, a sum of the total thickness of the first elastic buffer pad in the free state and a total thickness of the electrode component in a fully-charged state is 95% to 110% of the distance between the inner wall surfaces of the casing, optionally 98% to 105%, and further optionally 99% to 102%; in the length direction of the battery cell, a sum of a total thickness of the second elastic buffer pad in a free state and the length of the electrode component in the fully-discharged state is 80% to 99% of the distance between the inner wall surfaces of the casing, optionally 85% to 98%, and further optionally 90% to 95%; or in the length direction of the battery cell, a sum of the total thickness of the second elastic buffer pad in the free state and the length of the electrode component in a fully-charged state is 95% to 110% of the distance between the inner wall surfaces of the casing, optionally 98% to 105%, and further optionally 99% to 102%. Satisfying the given condition is beneficial to smooth insertion of the elastic buffer pad into the casing, and/or to improvement of volume stability of the battery cell and uniformity of stress distribution on an electrode sheet.

In some implementations of the present application, the ratio of the total thickness of the first elastic buffer pad in the free state to the total thickness of the electrode component in the fully-discharged state is 2% to 25%, optionally 5% to 20%, and further optionally 8% to 15%. Satisfying the given condition is not only beneficial to maintaining volume stability of the battery cell, but also able to balance energy density of the battery cell.

In some implementations of the present application, the ratio of an extension distance of the first elastic buffer pad in the free state in the length direction of the electrode component to the length of the electrode component is 0.8 to 1.2, optionally 0.85 to 1.1, and further optionally 0.9 to 1.05; and/or the ratio of an extension distance of the first elastic buffer pad in the free state in the height direction of the electrode component to the height of the electrode component is 0.8 to 1.2, optionally 0.85 to 1.1, and further optionally 0.9 to 1.05. Satisfying the given condition is beneficial to enabling the elastic buffer pad to cover most of a region of the electrode component, which is not only beneficial to improving volume stability of the battery cell, but also beneficial to further improving uniformity of stress distribution on the electrode sheet.

In some implementations of the present application, the orthographic projection of the first elastic buffer pad on the electrode component is located in a region in which the electrode component is located. Satisfying the given condition is not only beneficial to smooth insertion of the elastic buffer pad into the casing during assembly, but also beneficial to further balancing energy density of a battery.

In some implementations of the present application, the battery cell is a cylindrical battery cell, the at least one elastic buffer pad and the electrode component are stacked in the radial direction of the electrode component, and the distance between the inner wall surfaces of the casing is equal to the diameter of an inner cavity of the casing.

In some implementations of the present application, in the cylindrical battery cell, a sum of a total thickness of the elastic buffer pad in a free state and a total thickness of the electrode component in a fully-discharged state is 80% to 99% of the diameter of the inner cavity of the casing, optionally 85% to 98%, and further optionally 90% to 95%; and/or a sum of the total thickness of the elastic buffer pad in the free state and a total thickness of the electrode component in a fully-charged state is 85% to 110% of the diameter of the inner cavity of the casing, optionally 98% to 105%, and further optionally 99% to 102%. Satisfying the given condition is beneficial to smooth insertion of the elastic buffer pad into the casing, and/or to improvement of volume stability of the battery cell and uniformity of stress distribution on an electrode sheet.

In some implementations of the present application, in the cylindrical battery cell, the elastic buffer pad is disposed between the electrode component and the casing, and the ratio of an extension distance of the elastic buffer pad in the free state in the circumferential direction of the electrode component to the perimeter of the electrode component is 0.8 to 1.2, optionally 0.85 to 1.1, and further optionally 0.9 to 1.05; and/or the ratio of an extension distance of the elastic buffer pad in the free state in the height direction of the electrode component to the height of the electrode component is 0.8 to 1.2, optionally 0.85 to 1.1, and further optionally 0.9 to 1.05. Satisfying the given condition is beneficial to enabling the elastic buffer pad to cover most of a region of the electrode component, which is not only beneficial to improving volume stability of the battery cell, but also beneficial to further improving uniformity of stress distribution on the electrode sheet.

In some implementations of the present application, in the cylindrical battery cell, the extension distance of the elastic buffer pad in the free state in the circumferential direction of the electrode component is less than or equal to the perimeter of the electrode component; and/or the extension distance of the elastic buffer pad in the free state in the height direction of the electrode component is less than or equal to the height of the electrode component. Satisfying the given condition is not only beneficial to smooth insertion of the elastic buffer pad into the casing during assembly, but also beneficial to further balancing energy density of a battery.

In some implementations of the present application, the thickness of a single elastic buffer pad in the free state is 2% to 15% of the thickness of a single electrode component in the fully-discharged state, optionally 5% to 10%. Satisfying the given condition is not only beneficial to maintaining volume stability of the battery cell during a usage period, especially during a later period of usage, but also able to balance energy density of the battery cell.

In some implementations of the present application, the thickness of the single elastic buffer pad in the free state is 0.2 mm to 10.5 mm. Satisfying the given condition can not only balance a compressible deformation amount of the elastic buffer pad and energy density of the battery cell, but also enable a support layer to have certain strength.

A second aspect of the present application provides a battery, comprising: the battery cell according to the first aspect of the present application.

A third aspect of the present application provides an electrical apparatus, comprising: the battery according to the second aspect of the present application.

BRIEF DESCRIPTION OF THE DRAWINGS

The above and/or additional aspects and advantages of the present application will become apparent and more readily appreciated from the following description of the embodiments taken in conjunction with the accompanying drawings, in which:

FIG. 1 is a schematic diagram of a cross-sectional structure of a prismatic battery cell according to an implementation of the present application;

FIG. 2 is a schematic diagram of a cross-sectional structure of a prismatic battery cell according to another implementation of the present application;

FIG. 3 is a schematic diagram of a cross-sectional structure of a prismatic battery cell according to yet another implementation of the present application;

FIG. 4 is a schematic diagram of a cross-sectional structure of a prismatic battery cell according to still yet another implementation of the present application;

FIG. 5 is a schematic diagram of a cross-sectional structure of a prismatic battery cell according to still yet another implementation of the present application;

FIG. 6 is a schematic diagram of a cross-sectional structure of a prismatic battery cell according to still yet another implementation of the present application;

FIG. 7 is a schematic diagram of a cross-sectional structure of a prismatic battery cell according to still yet another implementation of the present application;

FIG. 8 is a schematic diagram of a cross-sectional structure of a prismatic battery cell according to still yet another implementation of the present application;

FIG. 9 is a schematic diagram of a cross-sectional structure of a cylindrical battery cell according to an implementation of the present application;

FIG. 10 is a schematic diagram of a cross-sectional structure of a cylindrical battery cell according to another implementation of the present application;

FIG. 11 is a schematic diagram of a structure of a battery cell according to an embodiment of the present application;

FIG. 12 is a schematic diagram of a structure of a battery module according to an embodiment of the present application;

FIG. 13 is a schematic diagram of a structure of a battery pack according to an embodiment of the present application;

FIG. 14 is an exploded view of a battery pack according to an embodiment of the present application; and

FIG. 15 is a schematic diagram of an implementation where a battery is used as an electrical apparatus of a power supply according to an embodiment of the present application.

Reference numerals:
11: Casing; 12: Electrode component; 13: Elastic buffer pad; 13a: First elastic buffer pad; 13b: Second elastic buffer pad; 1: Battery; 2: Battery module; 3: Battery pack; 4: Upper case; and 5: Lower case.

DETAILED DESCRIPTION OF PREFERRED EMBODIMENTS

The present application will be further described below with reference to specific embodiments. It should be understood that these specific embodiments are merely illustrative of the application and are not intended to limit the scope of the present application.
Implementations specifically disclosing a positive electrode active material and a preparation method thereof, a positive electrode sheet, a battery, and an electrical apparatus in the present application will be described below in detail with appropriate reference to the accompanying drawings. However, an unnecessary detailed description may be omitted. For example, a detailed description of well-known matters and repeated descriptions of a substantially same structure may be omitted. This is to avoid the following descriptions from becoming unnecessarily redundant and to facilitate understanding by those skilled in the art. The accompanying drawings and the following descriptions are provided for those skilled in the art to fully understand the present application, and are not intended to limit the subject matter described in the claims.
The "range" disclosed in the present application is limited in the form of a lower limit and/or an upper limit. A given range is limited by selecting a lower limit and/or an upper limit, which define the boundaries of the specific range. The range defined in this way may include or not include end values and may be combined arbitrarily, that is, any lower limit may be combined with any upper limit to form a range not explicitly recorded, and any lower limit may be combined with other lower limits to form a range not explicitly recorded, and likewise any upper limit may be combined with any other upper limit to form a range not explicitly recorded. In addition, each individually disclosed point or individual value may itself be combined as a lower limit or an upper limit with any other point or individual value, or with other lower or upper limits, to form a range not explicitly recorded. For example, if ranges of 60 to 120 and 80 to 110 are listed for specific parameters, it is understood that the ranges of 60 to 110 and 80 to 120 are also expected. Furthermore, if the smallest range values 1 and 2 are listed, and if the largest range values 3, 4 and 5 are listed, the following ranges may all be expected: 1 to 3, 1 to 4, 1 to 5, 2 to 3, 2 to 4, and 2 to 5. In the present application, unless otherwise stated, a numerical range "a to b" represents a shorthand representation for a combination of any real numbers between a and b, where both a and b are real numbers. For example, a numerical range of "0 to 5" represents that all real numbers in the range of "0 to 5" have been listed herein, and "0 to 5" is merely a shorthand representation of combinations of these numerical values. In addition, when a parameter is expressed as an integer $\geq 2$, it is equivalent to disclosing that the parameter is an integer such as 2, 3, 4, 5, 6, 7, 8, 9, 10, 11, or 12.
Unless otherwise specified, all implementations and optional implementations of the present application may be combined with each other to form new technical solutions, and it is conceivable that such technical solutions should be included in the disclosure of the present application.
Unless otherwise specified, all technical solutions and optional technical solutions of the present application may be combined with each other to form new technical solutions, and it is conceivable that such technical solutions should be included in the disclosure of the present application.
Unless otherwise specified, all steps in the present application may be performed sequentially or randomly, preferably sequentially. For example, the method includes steps S1 and S2, meaning that the method may include steps S1 and S2 performed sequentially or steps S2 and S1 performed sequentially. For example, the above-mentioned method may further include step S3, meaning that step S3 may be added to the method in any order, e.g. the method may include steps S1, S2, and S3, or steps S1, S3, and S2, or steps S3, S1, and S2, and the like.

Unless otherwise specified, the terms "including" and "containing" as used herein are meant to be open or closed. For example, the "including" and "containing" may mean that other components not listed may be further included or contained, or only the listed components may be included or contained.

In the present application, the term "or" is inclusive, unless specifically stated otherwise. For example, the phrase "A or B" means "A, B, or both A and B". More specifically, either of the following conditions satisfies the condition "A or B": A is true (or present) and B is false (or absent); A is false (or absent) and B is true (or present); or both A and B are true (or present).

Unless otherwise specified, in the present application, the term "and/or" is only an associative relationship for describing associated objects, indicating that three relationships may be present. For example, A and/or B may indicate the following three cases: presence of only A, presence of both A and B, and presence of only B. In addition, the character "/" herein generally indicates that associated objects are in a "or" relationship.

In the present application, the terms "a plurality of" and "various" mean two or more.

Unless otherwise defined, all technical and scientific terms used in the present application have the same meaning as commonly understood by those skilled in the art to which the present application belongs. The terms used in the present application herein are merely for the purpose of describing specific embodiments and are not intended to limit the present application. The terms "include", "be provided with", and any other variants thereof in the specification, claims, and accompanying drawings of the present application are intended to cover a non-exclusive inclusion. Unless otherwise specified, the terms used in the present application have the meanings commonly understood by those skilled in the art. Unless otherwise specified, the numerical values of each parameter mentioned in the present application may be measured by various measuring methods commonly used in the art, for example, according to the methods given in the embodiments of the present application.

With constant advancement of the green and environmental-friendly topic, the application of batteries has been advanced into various aspects of life, including vehicles, electronic devices, energy storage apparatuses, and the like. However, with constant promotion of battery applications, people's requirements for batteries are increasingly high. Taking lithium ions as an example, lithium ion batteries undergo volume changes during charging and discharging cycles, overcharging, and the like, and the expansion amount of the lithium ion batteries gradually increases with the increase of working time. This not only easily causes deformation of a battery casing under a compressional force, which affects volume stability of a battery, but also may affect, if an electrode sheet excessively expands during charging and discharging cycles of the battery, the distance between the electrode sheet and a separator, thereby increasing the risk of lithium precipitation, and affecting the service life of the battery. In view of this problem, there is currently a solution of disposing a buffer pad between or within cells. However, due to factors such as the type of active material of the electrode sheet and the thickness of an active substance layer, the expansion amount and expansion ratio of the battery during charging and discharging may be different. For different expansion systems, requirements for stress and strain of a buffer pad located inside a cell are different, and improper matching is not conducive to effectiveness of the buffer pad, and may even cause deterioration of performance of the cell.

In the present application, based on the difference between ratios of the distance difference between an electrode component in a fully-charged state and in a fully-discharged state in a battery cell in a first direction to the distance between the inner wall surfaces of a casing in the first direction, a stress-strain relationship of an elastic buffer pad is defined differently. That is, for a low expansion system, an elastic buffer pad with a compression ratio of $\leq 20\%$ in the thickness direction under a pressure of 0.1 MPa and a compression ratio of $\leq 60\%$ in the thickness direction under a pressure of 0.5 MPa is selected, which can not only buffer a volume expansion force generated by the electrode component during charging and discharging, but also enable the elastic buffer pad to have certain support strength. Even in a state of not being excessively compressed, it is beneficial to achieve direct attachment of the electrode component to an inner wall of the casing or attachment of the electrode component to the inner wall of the casing through the elastic buffer pad, so as to achieve interaction force and improve uniformity of stress distribution on an electrode sheet. For a high expansion system, an elastic buffer pad with a compression ratio of $\geq 50\%$ in the thickness direction under the pressure of 0.5 MPa is selected, which can achieve that the elastic buffer pad can be fully compressed during expansion of the electrode component, and space in the thickness direction of the elastic buffer pad is vacated to the electrode component, thereby reducing an expansion force of the electrode component. Therefore, for battery cells with different expansion systems, it is beneficial to enable the elastic buffer pad to exert a relatively good effect, and reduce the risk of expansion and deformation or performance deterioration of the battery cell.

The battery cell and the battery disclosed in the embodiments of the present application can be used in an electrical apparatus using a battery as a power supply or various energy storage systems using a battery as an energy storage component. The electrical apparatus may include, but is not limited to, a mobile phone, a tablet computer, a notebook computer, an electric toy, an electric tool, a battery-powered vehicle, an electric vehicle, a ship, a spacecraft, and the like. The electric toy may include a stationary or mobile electric toy, such as a game machine, an electric car toy, an electric ship toy, an electric airplane toy, and the like, and the spacecraft may be an airplane, a rocket, a space shuttle, a spaceship, etc.

A first aspect of the present application provides a battery cell, including: a casing; at least one electrode component, the electrode component being arranged inside the casing; and at least one elastic buffer pad, the elastic buffer pad being disposed on at least part of a surface of the electrode component and/or inside the electrode component, and the compression ratio of the elastic buffer pad in the thickness direction thereof satisfying the following relationship: $-5\% \leq P \leq 5\%$, the compression ratio of the elastic buffer pad under a pressure of 0.1 MPa being $\leq 20\%$, and the compression ratio thereof under a pressure of 0.5 MPa being $\leq 60\%$; or $P > 5\%$, the compression ratio of the elastic buffer pad under a pressure of 0.5 MPa being $\geq 50\%$; and the at least one electrode component and the at least one elastic buffer pad being stacked in a first direction, and P being a ratio of a difference between a total distance of the electrode component in a fully-charged state and a total distance of the electrode component in a fully-discharged state to a distance between the inner wall surfaces of the casing in the first direction.

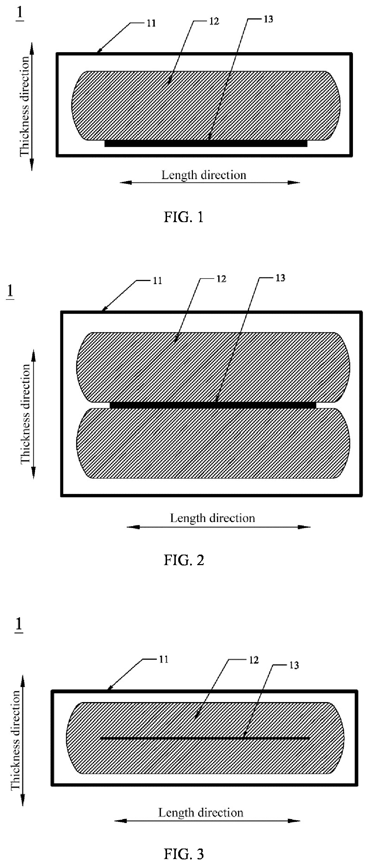

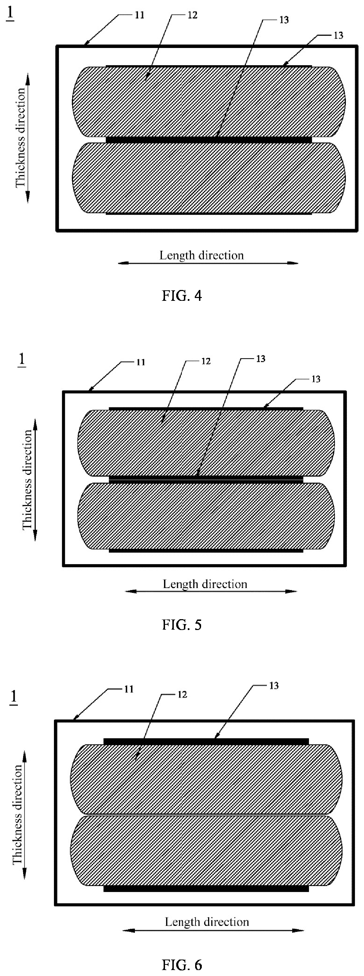

For example, referring to FIG. 1 to FIG. 7, the battery cell 1 according to the first aspect of the present application includes a casing 11, at least one electrode component 12, and at least one elastic buffer pad 13, the electrode component 12 is arranged in the casing 11, and the elastic buffer pad 13 may be disposed on at least part of the surface of the electrode component 12 and/or inside the electrode component 12. For example, the elastic buffer pad 13 may be disposed between the electrode component 12 and the casing 11 (referring to FIG. 1 for understanding), and/or disposed between two adjacent electrode components 12 (referring to FIG. 2 for understanding), and/or disposed inside the electrode component (referring to FIG. 3 for understanding). The elastic buffer pad 13 may be disposed between the electrode component 12 and the casing 11. It may be understood that the elastic buffer pad 13 may be disposed in at least one of the following regions: between the electrode component 12 and a side wall of the casing 11, between the electrode component 12 and a bottom wall of the casing 11, and between the electrode component 12 and a top wall of the casing 11. Optionally, referring to FIG. 4 or FIG. 5 for understanding, the elastic buffer pad 13 may be disposed both between the electrode component 12 and the casing 11 and between two adjacent electrode components. Still optionally, referring to FIG. 1, FIG. 6, and FIG. 7 for understanding, the elastic buffer pad 13 may be disposed between the electrode component 12 and the side wall of the casing 11. During an actual operation, two sides of the elastic buffer pad 13 in the thickness direction thereof may both be attached to the electrode component 12 (referring to FIG. 2 for understanding), or one side of the elastic buffer pad 13 in the thickness direction thereof may be attached to the electrode component 12 and the other side may be attached to the inner wall of the casing 11.

As some specific examples, when the battery cell 1 includes only one electrode component 12, the quantity of elastic buffer pads 13 may be one or more, which may be disposed between the electrode component 12 and the casing 11, or may be disposed inside the electrode component, and optionally, may be disposed between the electrode component 12 and the side wall of the casing 11. As other specific examples, when the battery cell 1 includes at least two electrode components 12, the quantity of elastic buffer pads 13 may be one or more, and the one or more elastic buffer pads 13 may be disposed only between battery components 12, or only between the battery component 12 and the casing 11, or only inside the electrode component 12, or may be partially disposed between battery components 12 and partially disposed between the battery component 12 and the casing 11, or the like. Optionally, the elastic buffer pad 13 disposed between the battery component 12 and the casing 11 may be disposed between the electrode component 12 and the side wall of the casing 11.

Optionally, the thickness direction of the at least one elastic buffer pad 13 is the same as the thickness direction of the battery cell 1 (referring to FIG. 1 to FIG. 6 and FIG. 8 for understanding). Further optionally, the thickness direction of the at least one elastic buffer pad 13 is the same as thickness directions of the battery cell 1 and the electrode component 12.

In the battery cell of the present application, the at least one electrode component 12 and the at least one elastic buffer pad 13 are stacked in a first direction. Optionally, the first direction may be the thickness direction of the electrode component 12, and when the electrode component 12 is a wound electrode component and includes a straight part and a corner part, the first direction may be the thickness direction of the straight part. When the electrode component 12 is cylindrical, the first direction is the radial direction of the electrode component, and the distance between inner wall surfaces of the casing 11 in the first direction is the diameter of an inner cavity of the casing.

In the battery cell of the present application, based on different expansion systems, there are different requirements for the stress-strain relationship of the elastic buffer pad 13. That is, according to the fact that in the battery cell, in the first direction, the ratio of the difference between the total distance of the electrode component in the fully-charged state and the total distance of the electrode component in the fully-discharged state to the distance between the inner wall surfaces of the casing differs, there are different requirements for the compression ratio of the elastic buffer pad in the thickness direction thereof. Taking an example in which the thickness direction of the electrode component is the first direction, and the thickness direction of the battery cell is the same as the thickness direction of the electrode component: in the battery cell, the ratio P ($P=\Delta d/d_0$, $\Delta d = d_1 - d_2$) of the difference $\Delta d$ between the total thickness $d_1$ of the electrode component in the fully-charged state and the total thickness $d_2$ of the electrode component in the fully-discharged state to

the distance $d_0$ between the inner wall surfaces of the casing 11 in the thickness direction differs, there are the following requirements for the compression ratio of the elastic buffer pad 13 in the thickness direction thereof:

When -5%≤P≤5%, an elastic buffer pad with a compression ratio of ≤ 20% under the pressure of 0.1 MPa and a compression ratio of ≤ 60% under the pressure of 0.5 MPa. For example, the compression ratio of the elastic buffer pad under the pressure of 0.1 MPa may be ≤ 20%, ≤ 18%, ≤ 16%, ≤ 14%, ≤ 12%, ≤ 10%, ≤ 8%, ≤ 6%, ≤ 4%, or the like, or may be within a range composed of any of the foregoing values; and for another example, the compression ratio of the elastic buffer pad under the pressure of 0.5 MPa may be ≤ 60%, ≤ 55%, ≤ 50%, ≤ 45%, ≤ 40%, ≤ 35%, ≤ 30%, ≤ 25%, ≤ 20%, or the like, or may be within a range composed of any of the foregoing values. When -5%≤P≤5%, expansion and deformation of the battery cell during charging and discharging is relatively small, but the elastic buffer pad cannot be excessively compressed. Selecting an elastic buffer pad with a compression ratio in the thickness direction thereof that satisfies the given condition under the pressure of 0.1 MPa and the pressure of 0.5 MPa can not only buffer a volume expansion force generated by the electrode component during charging and discharging, but also enable the elastic buffer pad to have certain support strength. Even in a state of not being excessively compressed, it is beneficial to achieve direct attachment of the electrode component to an inner wall of the casing or attachment of the electrode component to the inner wall of the casing through the elastic buffer pad or a Mylar film (that is, an insulating film), so as to achieve interaction force. This is not only beneficial to improving uniformity of stress distribution on an electrode sheet, but also beneficial to suppressing shaking of the electrode component, and further beneficial to reducing the risk of wrinkles in a local region of the electrode component and abnormalities such as purple spots and lithium precipitation in a wrinkle region, which cause a decrease in a utilization ratio of active lithium.

When P>5%, the compression ratio of the elastic buffer pad 13 under the pressure of 0.5 MPa is ≥ 50%, for example, ≥ 50%, ≥ 55%, ≥ 60%, ≥ 65%, ≥ 70%, ≥ 75%, ≥ 80%, ≥ 85%, or the like, or may be within a range composed of any of the foregoing values. When P>5%, expansion and deformation of the battery cell during charging and discharging is relatively large. Selecting an elastic buffer pad with a compression ratio in the thickness direction thereof that satisfies the given condition under the pressure of 0.5 MPa can enable the elastic buffer pad to be fully compressed during expansion of the electrode component, so as to vacate space in the thickness direction of the elastic buffer pad to the electrode component, thereby reducing an expansion force of the electrode component.

The compression ratio of the elastic buffer pad in the thickness direction thereof under different stresses can be determined with reference to GB/T 1041-92. The compression ratio of the elastic buffer pad in the thickness direction thereof is the ratio of the thickness change amount of the elastic buffer pad in a free state and in a stress state to the thickness of the elastic buffer pad in the free state. The free state of the elastic buffer pad is a state in which the elastic buffer pad is not subjected to any external force, and the stress state of the elastic buffer pad is a state in which the elastic buffer pad is subjected to a certain compressive stress. The thickness of the elastic buffer pad in the free state can be tested by using conventional instruments and conventional methods in this field, for example, a Mitutoyo ID-C112MX micrometer thickness gauge (or a similar instrument). A test is performed under a test force of less than or equal to 1.8 N, and a plurality of points (such as 5, 10, or the like) are randomly measured and averaged. The thickness of the elastic buffer pad in the stress state can be tested by using two parallel flat plates, and is obtained by making the elastic buffer pad located between the flat plates, and using the flat plates to apply a preset pressure to the elastic buffer pad and measuring the distance between the flat plates. An instrument used to measure the distance between the flat plates may include, but is not limited to, a conventional instrument such as a vernier caliper.

The fully-charged state is a state at room temperature in which charging is performed at a constant current of 0.33 C of the rated capacity of the battery cell to the upper limit of the cutoff voltage, and then is performed at a constant voltage until the current is 0.05 C, or a state in which charging is performed under this condition until an SOC of the battery no longer changes; The fully-discharged state is a state at room temperature in which discharging is performed at a constant current of 0.33 C of the rated capacity of the battery cell to the lower limit of the cutoff voltage. In the battery cell, the total distance of the electrode component in the first direction is an accumulated value of distances of all electrode components in the battery cell in the first direction. Taking an example in which the thickness direction of the electrode component is the first direction, the thickness of the electrode component generally extends in the thickness direction of the battery cell, the total thickness of the electrode component in the fully-charged state is an accumulated value of thicknesses of all electrode components in the battery cell in the fully-charged state at room temperature. Referring to FIG. 2 for understanding, there are two electrode components 12 in the battery cell 1, the total thickness of the electrode component in the fully-charged state is the sum of thicknesses of the two electrode components 12 in the battery cell in the fully-charged state at room temperature. Correspondingly, the total thickness of the electrode component in the fully-discharged state is an accumulated value of thicknesses of all electrode components in the battery cell in the fully-discharged state at room temperature. The thickness of the electrode component in the fully-charged state or in the fully-discharged state can also be measured by using a conventional method or a conventional instrument in this field, for example, the following methods can be used for testing: Two parallel flat plates are used, the electrode component is made to be located between the flat plates, a pressure of 0.1 MPa is applied to the electrode component by using the flat plates, and the thickness of the electrode component is obtained by measuring the distance between the flat plates. Optionally, the Yinghaoda PPG1200 battery thickness measuring instrument is used for testing. The distance between the inner wall surfaces of the casing in the first direction can be tested by using a conventional instrument and a conventional method in this field.

The battery cell according to the first aspect of the present application has the following beneficial effects: The battery cell is applicable to different expansion systems. For battery cells with different expansion systems, it is beneficial to enable the elastic buffer pad to exert a relatively good effect, improve volume stability of the battery cell during long-term use, reduce the risk of expansion and deformation or performance deterioration of the battery cell, and improve long-term use performance.

It may be understood that, in the embodiments of the present application, the battery cell includes, but is not limited to, a casing, an electrode component, and an elastic buffer pad. For example, the battery cell may further include an electrolyte solution; in the embodiments of the present application, the battery cell includes, but is not limited to, a secondary battery cell, a primary battery cell, and the like; in the embodiments of the present application, the battery cell includes, but is not limited to, a lithium ion battery cell, a sodium ion battery cell, a magnesium ion battery cell, or the like. In the embodiments of the present application, the battery cell includes, but is not limited to, a rigid battery cell, a pouch battery cell, or the like, and the rigid battery cell includes, but is not limited to, a metal battery casing cell or the like.

Furthermore, on the basis of satisfying the foregoing conditions, the battery cell according to the first aspect of the present application can further improve performance of the battery cell by controlling the compression ratio of the elastic buffer pad in the thickness direction thereof under a specific stress, a relationship between the elastic buffer pad and the electrode component and/or the size of the casing, an arrangement manner for different battery cell types, and the like. That is, in addition to satisfying the above conditions, one or more of the following conditions may be optionally satisfied.

In some implementations of the present application, an elastic buffer pad 13 is disposed between the electrode component 12 and the casing 11, and/or an elastic buffer pad 13 is disposed between two adjacent electrode components 12. Reference can be made to FIG. 1, FIG. 2, and FIG. 4 for understanding. Satisfying the given condition is further beneficial to improving volume stability of the battery cell during long-term use and reducing the risk of expansion and deformation or performance deterioration of the battery cell. Optionally, the elastic buffer pad 13 may be disposed only between the electrode component 12 and the casing 11 and/or between two adjacent electrode components 12, which is not only beneficial to molding of the electrode component, but also beneficial to reducing the expansion force generated by the electrode component on the casing.

In some implementations of the present application, when $-5\% \leq P \leq 5\%$, the compression ratio of the elastic buffer pad 13 under the pressure of 0.1 MPa may be $\leq 15\%$, optionally $\leq 10\%$, and/or the compression ratio of the elastic buffer pad 13 under the pressure of 0.5 MPa is $\leq 55\%$, optionally $\leq 50\%$.

For example, when $-5\% \leq P \leq 5\%$, the compression ratio of the elastic buffer pad in the thickness direction thereof under the pressure of 0.1 MPa may be $\leq 15\%$, $\leq 14\%$, $\leq 13\%$, $\leq 12\%$, $\leq 11\%$, $\leq 10\%$, $\leq 9\%$, $\leq 8\%$, $\leq 7\%$, $\leq 6\%$, $\leq 5\%$, or the like; and/or the compression ratio of the elastic buffer pad in the thickness direction thereof under the pressure of 0.5 MPa may be $\leq 55\%$, $\leq 53\%$, $\leq 51\%$, $\leq 50\%$, $\leq 48\%$, $\leq 45\%$, $\leq 42\%$, $\leq 40\%$, or the like. Selecting an elastic buffer pad that satisfies the given condition is not only beneficial to buffering an expansion force generated by the electrode component during use, but also beneficial to further achieving, in a low expansion system, direct attachment of the electrode component to an inner wall of the casing or attachment of the electrode component to the inner wall of the casing through the elastic buffer pad or a Mylar film, so as to achieve interaction force. This is further beneficial to improving uniformity of stress distribution on an electrode sheet, and reducing the risk of wrinkles in a local region of the electrode component and abnormalities such as purple spots and lithium precipitation in a wrinkle region, which cause a decrease in a utilization ratio of active lithium.

Selecting an elastic buffer pad that satisfies the given condition is not only beneficial to improving volume stability of a battery cell with a low expansion system during long-term use, but also beneficial to improving uniformity of stress distribution on an electrode sheet and reducing the risk of expansion and deformation or performance deterioration of the battery cell.

In some implementations of the present application, when $P > 5\%$, the compression ratio of the elastic buffer pad 13 under the pressure of 0.5 MPa may be $\geq 60\%$, and optionally $\geq 70\%$.

For example, when $P > 5\%$, the compression ratio of the elastic buffer pad in the thickness direction thereof under the pressure of 0.5 MPa may be $\geq 60\%$, $\geq 62\%$, $\geq 65\%$, $\geq 68\%$, $\geq 70\%$, $\geq 72\%$, $\geq 75\%$, $\geq 78\%$, $\geq 80\%$, or the like. Selecting an elastic buffer pad that satisfies the given condition is further beneficial to reducing an expansion force generated by the electrode component on the casing in a battery cell with a high expansion system, improving volume stability of the battery cell during long-term use, and reducing the risk of expansion and deformation or performance deterioration of the battery cell.

In some implementations of the present application, the electrode component 12 is a wound electrode component and includes a straight part and a corner part, and the elastic buffer pad 13 may be disposed on at least part of the surface of the straight part and/or the corner part.

In the battery cell of the present application, the electrode component may be a laminated electrode component or a wound electrode component; and the wound electrode component may be used in a prismatic casing or in a cylindrical casing. During charging and discharging of the wound electrode component, there is a relatively high risk of non-uniform stress distribution on an electrode sheet, especially for a prismatic battery cell with the wound electrode component. Combining the wound electrode component with the elastic buffer pad is beneficial to alleviating the problem of non-uniform stress distribution on the electrode sheet in the wound electrode component, reducing polarization difference, and improving volume stability and long-term cycle performance. Optionally, the electrode component 12 is a wound electrode component and includes a straight part and a corner part, and the elastic buffer pad 13 may be disposed on at least part of the surface of the straight part and/or the corner part, which is beneficial to further alleviating the problem of non-uniform stress distribution on the electrode sheet in the prismatic battery cell. It may be understood that the prismatic battery cell includes, but is not limited to, a square battery cell. Further optionally, the straight part of the wound electrode component may be disposed with an elastic buffer pad 13.

In some implementations of the present application, referring to FIG. 1 to FIG. 8 for understanding, the battery cell 1 may be a prismatic battery cell.

In some implementations of the present application, the prismatic battery cell may include: at least one first elastic buffer pad 13a and/or at least one second elastic buffer pad 13b, the first elastic buffer pad 13a and the electrode component 12 being stacked in the thickness direction of the battery cell, and/or the second elastic buffer pad 13b and the electrode component 12 being stacked in the length direction of the battery cell.

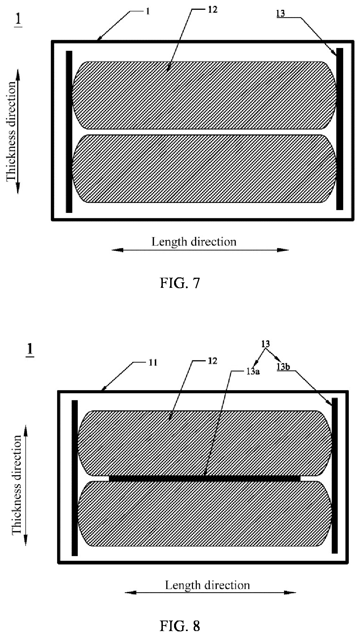

Referring to FIG. 8 for understanding, taking a square battery cell as an example, in the given structural design, the thickness of the first elastic buffer pad 13a may extend in the thickness direction of the battery cell, and the thickness of the second elastic buffer pad 13b may extend in the length direction of the battery cell. Disposing the first elastic buffer pad 13a and disposing the second elastic buffer pad 13b are beneficial to reducing the expansion force generated by the electrode component during use. Optionally, the battery cell may include at least one first elastic buffer pad 13a. In the casing 11 of the square battery cell, the area of two side walls disposed opposite to each other in the thickness direction of the battery cell is generally large. The first elastic buffer pad is disposed between the two side walls, which is beneficial to increasing the contact area between the elastic buffer pad and the electrode component, thereby not only helping to further reduce the expansion force that may be generated by the electrode component during use, but also helping to further alleviate the problem of potential non-uniform stress distribution on the electrode sheet in the wound electrode component. Further optionally, the prismatic battery cell may include only the first elastic buffer pad 13a, and satisfying the given condition is not only beneficial to reducing the expansion force of the electrode component and alleviating the problem of potential uneven stress distribution on the electrode sheet, but also beneficial to simplifying the structure of the battery cell and improving energy density of the battery cell by not disposing the second elastic buffer pad.

In some implementations of the present application, in the prismatic battery cell, in the thickness direction of the battery cell, the sum of the total thickness of the first elastic buffer pad 13a in the free state and the total thickness of the electrode component 12 in the fully-discharged state may be 80% to 99% of the distance between the inner wall surfaces of the casing 11, optionally 85% to 98%, and further optionally 90% to 95%; and/or the sum of the total thickness of the first elastic buffer pad 13a in the free state and the total thickness of the electrode component 12 in the fully-charged state may be 95% to 110% of the distance between the inner wall surfaces of the casing 11, optionally 98% to 105%, and further optionally 99% to 102%.

Referring to FIG. 8 for understanding, taking a square battery cell as an example, the sum of the total thickness d of the first elastic buffer pad 13a in the free state and the total thickness $d_2$ of the electrode component 12 in the fully-discharged state may be 80% to 99% of the distance $d_0$ between two inner wall surfaces disposed opposite to each other of the casing 11 in the thickness direction thereof, that is, $80\% \leq \frac{d+d_2}{d_0} \leq 99\%$. For example, the value of $\frac{d+d_2}{d_0}$ may be 80%, 82%, 85%, 87%, 89%, 91%, 95%, 97%, 99%, or the like, or may be within a range composed of any of the foregoing values. Satisfying the given condition can make, before insertion into the casing, a gap exist between the elastic buffer pad and the casing and a gap exist between the electrode component and the casing, which is beneficial to smooth insertion of the elastic buffer pad and the electrode component into the casing and facilitates assembly of the battery cell. Optionally, $85\% \leq \frac{d+d_2}{d_0} \leq 98\%$, further optionally $90\% \leq \frac{d+d_2}{d_0} \leq 95\%$, satisfying the given condition is further beneficial to smooth insertion of the elastic buffer pad and the electrode component into the casing, and is also beneficial to direct or indirect contact between the electrode component after charging and an inner wall of the casing, so as to improve uniformity of stress distribution on the electrode sheet.

Taking a square battery cell as an example, the sum of the total thickness d of the first elastic buffer pad 13a in the free state and the total thickness $d_1$ of the electrode component 12 in the fully-charged state may be 95% to 110% of the distance $d_0$ between two inner wall surfaces disposed opposite to each other of the casing 11 in the thickness direction thereof, that is, $95\% \leq \frac{d+d_1}{d_0} \leq 110\%$. For example, the value of $\frac{d+d_1}{d_0}$ may be 95%, 97%, 99%, 100%, 102%, 104%, 106%, 108%, 110%, or the like, or may be within a range composed of any of the foregoing values. Satisfying the given condition is further beneficial to direct attachment of the electrode component to an inner wall of the casing or attachment of the electrode component to the inner wall of the casing through the elastic buffer pad (or a Mylar film) during use of the battery cell, so as to achieve interaction force. This is further beneficial to improving uniformity of stress distribution on the electrode sheet, reducing the risk of wrinkles in a local region of the electrode component and abnormalities such as purple spots and lithium precipitation in a wrinkle region, which cause a decrease in a utilization ratio of active lithium, and improving the capacity retention ratio of the battery cell. Optionally, $98\% \leq \frac{d+d_1}{d_0} \leq 105\%$, and further optionally, $99\% \leq \frac{d+d_1}{d_0} \leq 102\%$, satisfying the given condition can further reduce the expansion force that may be generated by the electrode component on the casing while improving uniformity of stress distribution on the electrode sheet.

Satisfying the given condition is not only beneficial to assembly of the battery cell, but also beneficial to improving volume stability of the battery cell and uniformity of stress distribution on the electrode sheet, thereby helping to reduce the risk of expansion and deformation or performance deterioration of the battery cell.

In some implementations of the present application, in the prismatic battery cell, in the length direction of the battery cell, the sum of the total thickness of the second elastic buffer pad 13b in the free state and the length of the electrode component 12 in the fully-discharged state may be 80% to 99% of the distance between the inner wall surfaces of the casing 11, optionally 85% to 98%, and further optionally 90% to 95%; and/or the sum of the total thickness of the second elastic buffer pad 13b in the free state and the length of the electrode component 12 in the fully-charged state may be 85% to 110% of the distance between the inner wall surfaces of the casing 11, optionally 98% to 105%, and further optionally 99% to 102%.

For example, referring to FIG. 8 for understanding, taking a square battery cell as an example, the sum of the total thickness of the second elastic buffer pad 13b in the free state and the length of the electrode component 12 in the fully-discharged state may be 80%, 82%, 85%, 87%, 89%, 91%, 95%, 97%, or 99% of the distance between two inner wall surfaces disposed opposite to each other of the casing 11 in the length direction thereof, or may be within a range composed of any of the foregoing values. The length direction of the electrode component 12 in the fully-discharged state and the length direction of an inner cavity of the casing are shown in FIG. 8. In the present application, the length of the electrode component 12 may be the maximum extension distance in the length direction of the battery cell. Satisfying the given condition can make, before insertion into the casing, a gap exist between the elastic buffer pad and the casing and a gap exist between the electrode component and the casing, which is beneficial to smooth insertion of the elastic buffer pad and the electrode component into the casing and facilitates assembly of the battery cell. Optionally, the sum of the total thickness of the second elastic buffer pad 13b in the free state and the length of the electrode component 12 in the fully-discharged state may be 85% to 98% of the distance between two inner wall surfaces disposed opposite to each other of the casing 11 in the length direction thereof, and further optionally 90% to 95%. Satisfying the given condition is further beneficial to smooth insertion of the elastic buffer pad and the electrode component into the casing, and is also beneficial to direct or indirect contact between the electrode component after charging and an inner wall of the casing, so as to improve uniformity of stress distribution on the electrode sheet.

For example, referring to FIG. 8 for understanding, taking a square battery cell as an example, the sum of the total thickness of the second elastic buffer pad 13b in the free state and the length of the electrode component 12 in the fully-charged state may be 95%, 97%, 99%, 100%, 102%, 104%, 106%, 108%, or 110% of the distance between two inner wall surfaces disposed opposite to each other of the casing 11 in the length direction thereof, or may be within a range composed of any of the foregoing values. Satisfying the given condition is further beneficial to direct attachment of the electrode component to an inner wall of the casing or attachment of the electrode component to the inner wall of the casing through the elastic buffer pad (or a Mylar film) during use, so as to achieve interaction force. This is further beneficial to improving uniformity of stress distribution on the electrode sheet, reducing the risk of wrinkles in a local region of the electrode component and abnormalities such as purple spots and lithium precipitation in a wrinkle region, which cause a decrease in a utilization ratio of active lithium, and improving the capacity retention ratio of the battery cell. Optionally, the sum of the total thickness of the second elastic buffer pad 13b in the free state and the length of the electrode component 12 in the fully-charged state may be 98% to 105% of the distance between two inner wall surfaces disposed opposite to each other of the casing 11 in the length direction thereof, and further optionally 99% to 102%. Satisfying the given condition can further reduce the expansion force that may be generated by the electrode component on the casing while improving uniformity of stress distribution on the electrode sheet.

Satisfying the given condition is not only beneficial to assembly of the battery cell, but also beneficial to improving volume stability of the battery cell and uniformity of stress distribution on the electrode sheet, thereby helping to reduce the risk of expansion and deformation or performance deterioration of the battery cell.

In some implementations of the present application, the ratio of the total thickness of the first elastic buffer pad 13a in the free state to the total thickness of the electrode component 12 in the fully-discharged state may be 2% to 25%, optionally 5% to 20%, and further optionally 8% to 15%.

Referring to FIG. 8 for understanding, the ratio of the total thickness d of the first elastic buffer pad 13a in the free state to the total thickness $d_2$ of the electrode component 12 in the fully-discharged state may be 2% to 25%, that is, $2\% \leq d/d_2 \leq 25\%$. For example, the value of $d/d_2$ may be 2%, 3%, 5%, 7%, 9%, 11%, 13%, 15%, 17%, 19%, 21%, 23%, or 25%, or may be within a range composed of any of the foregoing values. Increasing the value of $d/d_2$ is beneficial to improving absorption capacity of the elastic buffer pad to the expansion and deformation and the expansion force that are generated by the electrode component, and is beneficial to further suppressing expansion and deformation of the battery cell. The value of $d/d_2$ satisfies the given condition is not only beneficial to maintaining volume stability of the battery cell during a usage period, especially during a later period of usage, but also able to balance energy density of the battery cell. Optionally, the value of $d/d_2$ may be 5% to 20%, and further optionally 8% to 15%. Satisfying the given condition is beneficial to further balance volume stability and energy density of the battery cell during a usage period, especially during a later period of usage.

Satisfying the given condition is not only beneficial to maintaining volume stability of the battery cell, but also able to balance energy density of the battery cell.

In some implementations of the present application, the ratio of an extension distance of the first elastic buffer pad 13a in the free state in the length direction of the electrode component 12 to the length of the electrode component 12 may be 0.8 to 1.2, optionally 0.85 to 1.1, and further optionally 0.9 to 1.05; and/or the ratio of an extension distance of the first elastic buffer pad 13a in the free state in the height direction of the electrode component 12 to the height of the electrode component 12 may be 0.8 to 1.2, optionally 0.85 to 1.1, and further optionally 0.9 to 1.05.

Referring to FIG. 8 for understanding, the ratio of the extension distance of the first elastic buffer pad 13a in the free state in the length direction of the electrode component 12 to the length of the electrode component 12 may be 0.8, 0.85, 0.9, 0.95, 1, 1.05, 1.1, 1.15, 1.2, or the like, or may be within a range composed of any of the foregoing values. In this ratio, the length of the electrode component is the maximum extension distance of the electrode component in the fully-charged state in the length direction of the battery cell, and the length of the electrode component and the extension distance of the first elastic buffer pad in the free state in the length direction of the electrode component can be measured by using a conventional method and a conventional instrument.

Referring to FIG. 8 for understanding, the ratio of the extension distance of the first elastic buffer pad 13a in the free state in the height direction of the electrode component 12 to the height of the electrode component 12 may be 0.8 to 1.2, 0.8, 0.85, 0.9, 0.95, 1, 1.05, 1.1, 1.15, or 1.2, or may be within a range composed of any of the foregoing values. In this ratio, the height of the electrode component is the maximum extension distance of the electrode component in the fully-charged state in the height direction of the battery cell, and the height of the electrode component and the extension distance of the first elastic buffer pad in the free state in the height direction of the electrode component can be measured by using a conventional method and a conventional instrument.

Sizes of the first elastic buffer pad and the electrode component satisfy the given condition, which is beneficial to enabling the elastic buffer pad to cover most of a region of the electrode component. This is not only beneficial to improving volume stability of the battery cell, but also beneficial to further improving uniformity of stress distribution on the electrode sheet and reducing the risk of performance deterioration of the battery cell.

In some implementations of the present application, referring to FIG. 8 for understanding, the orthographic projection of the first elastic buffer pad 13a on the electrode component 12 may be located in a region in which the electrode component 12 is located. The first elastic buffer pad satisfies the given condition, which is not only beneficial to smooth insertion of the elastic buffer pad into the casing during assembly, but also beneficial to further balancing energy density of the battery.

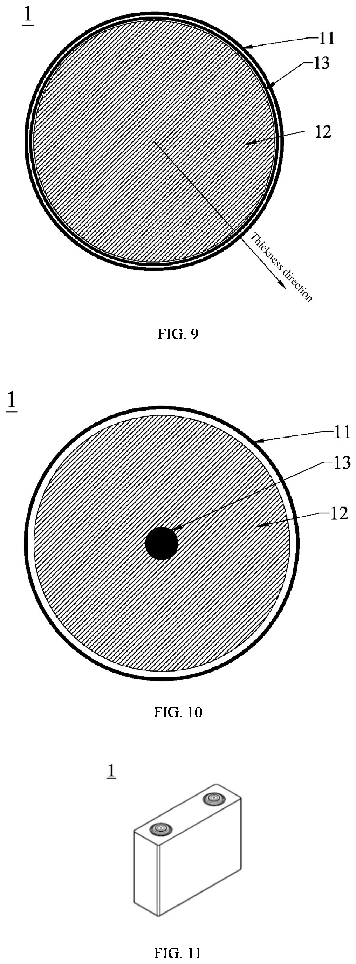

In some implementations of the present application, referring to FIG. 9 and FIG. 10 for understanding, the battery cell 1 may be a cylindrical battery cell, the at least one elastic buffer pad 13 and the electrode component 12 are stacked in the radial direction of the electrode component 12, and the distance between the inner wall surfaces of the casing 11 is equal to the diameter of an inner cavity of the casing 11. That is, the thickness of the electrode component 12 may extend in the radial direction thereof, and the distance between the inner wall surfaces of the casing 11 may be equal to or slightly less than the diameter of the inner cavity of the casing 11. For example, the difference between the distance between the inner wall surfaces of the casing 11 and the diameter of the inner cavity of the casing 11 may be less than or equal to 2%, and optionally less than or equal to 1%. The cylindrical battery cell generally includes only one wound electrode component, and the elastic buffer pad may be disposed inside the wound electrode component, so that a laminated unit of the electrode component starts winding around the elastic buffer pad; and/or the elastic buffer pad may be disposed between the wound electrode component and the casing. In the present application, the diameter of the inner cavity of the casing 11 may be understood as an average diameter of the inner cavity of the casing.

In some implementations of the present application, in the cylindrical battery cell, the sum of the total thickness of the elastic buffer pad 13 in the free state and the total thickness of the electrode component 12 in the fully-discharged state may be 80% to 99% of the diameter of the inner cavity of the casing 11, optionally 85% to 98%, and further optionally 90% to 95%; and/or the sum of the total thickness of the elastic buffer pad 13 in the free state and the total thickness of the electrode component 12 in the fully-charged state may be 85% to 110% of the diameter of the inner cavity of the casing 11, optionally 98% to 105%, and further optionally 99% to 102%.

For example, referring to FIG. 9 for understanding, the total thickness of the elastic buffer pad 13 in the free state and the total thickness of the electrode component 12 in the fully-discharged state (or the fully-discharged state) can be understood as the average diameter of the electrode component plus twice the thickness of a single-layer elastic buffer pad 13 in the free state. In FIG. 10, the total thickness of the elastic buffer pad 13 in the free state and the total thickness of the electrode component 12 in the fully-discharged state (or fully-discharged state) may be understood as the average diameter of the elastic buffer pad 13 plus twice the thickness of the electrode component. In the present application, the diameter of the inner cavity of the casing 11 may be understood as the average diameter of the inner cavity of the casing, which may be measured by using a conventional method and a conventional instrument.

Referring to FIG. 9 and FIG. 10 for understanding, in the cylindrical battery cell, the sum of the total thickness of the elastic buffer pad 13 in the free state and the total thickness of the electrode component 12 in the fully-discharged state may be 80%, 82%, 85%, 87%, 89%, 91%, 95%, 97%, 99%, or the like of the diameter of the inner cavity of the casing 11, or may be within a range composed of any of the foregoing values. Satisfying the given condition can make, before insertion into the casing, a gap exist between the elastic buffer pad and the casing and a gap exist between the electrode component and the casing, which is beneficial to smooth insertion of the elastic buffer pad and the electrode component into the casing and facilitates assembly of the battery cell. The sum of the total thickness of the elastic buffer pad 13 in the free state and the total thickness of the electrode component 12 in the fully-charged state may be 95%, 97%, 99%, 100%, 102%, 104%, 106%, 108%, 110%, or the like of the diameter of the inner cavity of the casing 11, or may be within a range composed of any of the foregoing values. Satisfying the given condition is further beneficial to direct attachment of the electrode component to an inner wall of the casing or attachment of the electrode component to the inner wall of the casing through the elastic buffer pad (or a Mylar film) during use of the battery cell, so as to achieve interaction force. This is further beneficial to improving uniformity of stress distribution on the electrode sheet, reducing the risk of wrinkles in a local region of the electrode component and abnormalities such as purple spots and lithium precipitation in a wrinkle region, which cause a decrease in a utilization ratio of active lithium, and improving the capacity retention ratio of the battery cell.

Satisfying the given condition is not only beneficial to assembly of the battery cell, but also beneficial to improving volume stability of the battery cell and uniformity of stress distribution on the electrode sheet, thereby helping to reduce the risk of expansion and deformation or performance deterioration of the battery cell.

In some implementations of the present application, in the cylindrical battery cell, the elastic buffer pad 13 may be disposed between the electrode component 12 and the casing 11, and the ratio of an extension distance of the elastic buffer pad 13 in the free state in the circumferential direction of the electrode component 12 to the perimeter of the electrode component 12 is 0.8 to 1.2, optionally 0.85 to 1.1, and further optionally 0.9 to 1.05; and/or the ratio of an extension distance of the elastic buffer pad 13 in the free state in the height direction of the electrode component 12 to the height of the electrode component 12 may be 0.8 to 1.2, optionally 0.85 to 1.1, and further optionally 0.9 to 1.05.

Referring to FIG. 9 for understanding, the ratio of the extension distance of the elastic buffer pad 13 in the free state in the circumferential direction of the electrode component 12 to the perimeter of the electrode component 12 may be 0.8, 0.85, 0.9, 0.95, 1, 1.05, 1.1, 1.15, 1.2, or the like, or may be within a range composed of any of the foregoing values. In this ratio, the perimeter of the electrode assembly refers to the average perimeter of the electrode component in the fully-charged state. The ratio of the extension distance of the elastic buffer pad 13 in the free state in the height direction of the electrode component 12 to the height of the electrode component 12 may be 0.8, 0.85, 0.9, 0.95, 1, 1.05, 1.1, 1.15, 1.2, or the like, or may be within a range composed of any of the foregoing values. In this ratio, the height of the electrode assembly refers to the maximum extension distance of the electrode component in the fully-charged state in the height direction of the battery cell. In the present application, the perimeter and height of the electrode component, and the extension distance of the elastic buffer pad 13 in the free state in the circumferential direction or height of the electrode component can be measured by using a conventional method and a conventional instrument.

Sizes of the first elastic buffer pad and the electrode component satisfy the given condition, which is beneficial to enabling the elastic buffer pad to cover most of a region of the electrode component. This is not only beneficial to improving volume stability of the battery cell, but also beneficial to further improving uniformity of stress distribution on the electrode sheet and reducing the risk of performance deterioration of the battery cell.

In some implementations of the present application, in the cylindrical battery cell, the extension distance of the elastic buffer pad 13 in the free state in the circumferential direction of the electrode component 12 is less than or equal to the perimeter of the electrode component 12; the extension distance of the elastic buffer pad 13 in the free state in the height direction of the electrode component 12 is less than or equal to the height of the electrode component 12. The elastic buffer pad satisfies the given condition, which is not only beneficial to smooth insertion of the elastic buffer pad into the casing during assembly, but also beneficial to further balancing energy density of the battery.

In some implementations of the present application, the thickness of a single elastic buffer pad 13 in the free state may be 2% to 15% of the thickness of a single electrode component 12 in the fully-discharged state, optionally 5% to 10%. For example, the thickness of the single elastic buffer pad 13 in the free state may be 2%, 3%, 5%, 7%, 9%, 11%, 13%, 15%, or the like of the thickness of the single electrode component 12 in the fully-discharged state, or may be within a range composed of any of the foregoing values. Satisfying the given condition is not only beneficial to maintaining volume stability of the battery cell during a usage period, especially during a later period of usage, but also able to balance energy density of the battery cell.

In some implementations of the present application, the thickness of a single elastic buffer pad 13 in the free state may be 0.2 mm to 10.5 mm. For example, the thickness of the single elastic buffer pad 13 in the free state may be 0.2 mm, 0.5 mm, 1 mm, 2 mm, 3 mm, 4 mm, 5 mm, 6 mm, 7 mm, 8 mm, 9 mm, 10 mm, or 10.5 mm, or may be within a range composed of any of the foregoing values. Satisfying the given condition can not only balance a compressible deformation amount of the elastic buffer pad and energy density of the battery cell, but also enable a support layer to have certain strength.

It may be understood that, in the battery cell according to the first aspect of the present application, the structure and material of the elastic buffer pad are not particularly limited, as long as the compression ratio of the elastic buffer pad in the thickness direction thereof under a preset pressure can satisfy the given requirement. For example, at least one of the material, porosity, pore diameter, or the like of the elastic buffer pad can be adjusted to obtain elastic buffer pads with different stress-strain relationships, so as to achieve different compression ratios of the elastic buffer pad in the thickness direction thereof under the preset pressure.

For example, the elastic buffer pad may be a single-layer structure, and the material of the elastic buffer pad may include, but is not limited to, at least one of foamed polyethylene, polypropylene, polyurethane, silicone rubber, or the like.

For example, the elastic buffer pad may be a multi-layer structure, and may specifically include an elastic buffer layer and a support layer, and the support layer may be disposed on at least one side of two sides of the elastic buffer layer in the thickness direction thereof. For example, in the battery cell, the at least one elastic buffer pad includes one elastic buffer layer and one support layer, and/or the at least one elastic buffer pad includes one elastic buffer layer and two support layers. Optionally, the elastic modulus of the elastic buffer layer is less than the elastic modulus of the support layer, and/or the compression ratio of the elastic buffer layer in the thickness direction thereof is greater than the compression ratio of the support layer in the thickness direction thereof under the same pressure, and/or the porosity of the elastic buffer layer may be greater than the porosity of the support layer, for example, the porosity of the elastic buffer layer 31 may be 40% to 95%, optionally 55% to 90%, and further optionally 70% to 85%, and the porosity of the support layer 32 may be less than or equal to 5%. Further optionally, the elastic buffer layer may include at least one of foamed polyethylene, polypropylene, polyurethane, and silicone rubber, and the support layer may include, but is not limited to, at least one of high-density polyethylene, polymethacrylate, polyethylene terephthalate, or polytetrafluoroethylene. Still optionally, at least one of the following conditions may also be satisfied: The thickness of the elastic buffer layer may be greater than the thickness of the support layer; in a single elastic buffer pad, the ratio of the total thickness of the support layer to the free thickness of the elastic buffer layer may be 0.005 to 0.1, such as 0.02 to 0.05; the thickness of the elastic buffer layer in the natural state may be 0.2 mm to 10 mm, and the thickness of the single-layer support layer may be 30 $\mu$m to 200 $\mu$m; and the elastic buffer layer may be adhesively connected to the support layer. The elastic buffer layer can be supported by combining the support layer with the elastic buffer layer, which can not only suppress thermal shrinkage of the elastic buffer layer (such as thermal shrinkage during vacuum baking), but also optionally suppress thermal shrinkage of the elastic buffer layer in the two-dimensional direction perpendicular to the thickness direction thereof by using the support layer, thereby alleviating the problem that the elastic buffer layer loses the original function due to thermal shrinkage. In addition, the problem of material damage of the elastic buffer pad due to mechanical stress in the later period of use f the battery can be alleviated. Furthermore, arranging the elastic buffer pad inside the battery cell is beneficial to further improving volume stability of the battery during long-term use and enhancing long-term use performance.

In some embodiments of the present application, the electrode component 12 may include a positive electrode sheet, a negative electrode sheet, and a separator, and the positive electrode sheet, the negative electrode sheet, and the separator may be formed into an electrode component through a winding process. During charging and discharging of the battery, active ions are intercalated and deintercalated back and forth between the positive electrode sheet and the negative electrode sheet. The separator is disposed between the positive electrode sheet and the negative electrode sheet to play a separating role.

[Positive electrode sheet]

In the battery, the positive electrode sheet generally includes a positive electrode current collector and a positive electrode active substance layer disposed on the positive electrode current collector, and the positive electrode active substance layer includes a positive electrode active material. The positive electrode current collector may be a conventional metal foil or a composite current collector (a composite current collector may be formed by disposing a metal material on a polymer base material). As an example, the positive electrode current collector may be an aluminum foil.

In the present application, the specific type of the positive electrode active material is not limited, and an active material which can be used for a positive electrode of a battery known in the art may be used, and a person skilled in the art may select the material according to actual requirements. For example, the positive electrode active material may include, but is not limited to, a positive electrode active material of a lithium-containing phosphate of a lithium transition metal oxide and/or olivine structure. The lithium transition metal oxide may include an undoped and/or optionally doped modified lithium transition metal oxide, and an uncoated and/or coated modified lithium transition metal oxide, and the lithium-containing phosphate of the olivine structure may include an undoped and/or optionally doped modified lithium-containing phosphate of the olivine structure and an uncoated and/or coated modified lithium-containing phosphate of the olivine structure. The positive electrode active materials within a given range may be obtained either by preparation or by commercial paths.

In some specific embodiments of the present application, the positive electrode active substance layer may further optionally include a binder, a conductive agent, and other optional auxiliary agents. As an example, the conductive agent may include one or more of superconducting carbon, acetylene black, carbon black, ketjen black, a carbon dot, a carbon nanotube, Super P (SP), graphene, and a carbon nanofiber. As an example, the binder may include, but is not limited to, one or more of styrene-butadiene rubber (SBR), water-based acrylic resin, polyvinylidene fluoride (PVDF), polytetrafluoroethylene (PTFE), ethylene-vinyl acetate copolymer (EVA), polyvinyl alcohol (PVA), and polyvinyl butyral (PVB).

[Negative electrode sheet]

In the battery, the negative electrode sheet generally includes a negative electrode current collector and a negative electrode active substance layer disposed on the negative electrode current collector, and the negative electrode active substance layer includes a negative electrode active material. The negative electrode current collector may be a conventional metal foil or a composite current collector (for example, a metal material may be disposed on a polymer base material to form a composite current collector). As an example, the negative electrode current collector may be a copper foil.

In some embodiments of the present application, the battery cell in the first aspect of the present application may be a lithium ion battery cell, and in this case, the specific type of the negative electrode active material is not limited, and an active material which can be used for a negative electrode of the battery known in the art may be used, and a person skilled in the art may select the material according to actual requirements. As an example, the negative electrode active material may include, but is not limited to, one or more of artificial graphite, natural graphite, hard carbon, soft carbon, a silicon-based material, or a tin-based material. Optionally, the silicon-based material may include one or more of elemental silicon, a silicon-oxygen compound (for example, silicon monoxide), a silicon-carbon composite, a silicon-nitrogen composite, and a silicon alloy. Further optionally, the tin-based material may include one or a plurality of elemental tin, a tin oxide compound, and a tin alloy. The negative electrode active material within the given range may be obtained either by preparation or by commercial paths.

In some specific embodiments of the present application, the negative electrode active substance layer may further optionally include a binder, a conductive agent, and other optional auxiliary agents. As an example, the conductive agent may include one or more of superconducting carbon, acetylene black, carbon black, ketjen black, a carbon dot, a carbon nanotube, graphene, and a carbon nanofiber. As an example, the binder may be one or more of styrene-butadiene rubber (SBR), water-based acrylic resin, polyvinylidene fluoride (PVDF), polytetrafluoroethylene (PTFE), an ethylene-vinyl acetate copolymer (EVA), polyvinyl alcohol (PVA), and polyvinyl butyral (PVB). As an example, other optional auxiliaries may include, but are not limited to, thickening and dispersing agents (for example, carboxymethylcellulose sodium CMC-Na), and PTC thermistor materials.

In some embodiments of the present application, the separator in the battery may include, but is not limited to, a polyethylene porous film, a polypropylene porous film, a polyimide porous film, and a porous film formed by compounding a plurality of polymers.

A second aspect of the present application provides a battery, including: the battery cell according to the first aspect of the present application. Optionally, the battery may be a secondary battery, for example, the battery may be a lithium ion secondary battery.

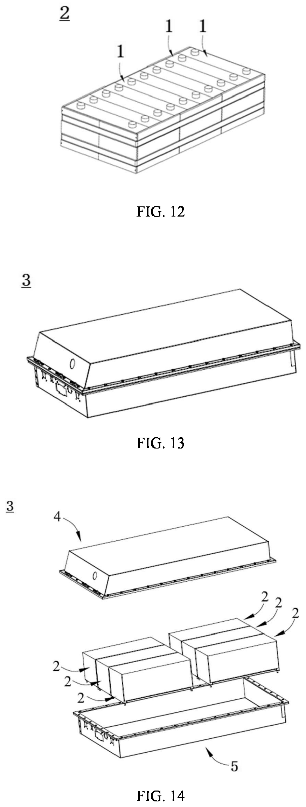

In some embodiments of the present application, the battery may be either a battery cell 1 (referring to FIG. 11 for understanding) or a battery module 2 (referring to FIG. 12 for understanding) or a battery pack 3 (referring to FIG. 13 for understanding) composed of the battery cell 1.

In some implementations, the battery may be the battery module. The battery module may include one or more battery cells, and the specific number of the battery cells may be adjusted according to application and capacity of the battery module. FIG. 12 shows a battery module 2 as an example. Referring to FIG. 12, in the battery module 2, a plurality of battery cells 1 may be disposed sequentially in the length direction of the battery module 2. Certainly, the battery cells may alternatively be arranged in any other manner. Further, the plurality of battery cells 1 may be fastened by using fasteners. Optionally, the battery module 2 may further include a housing having an accommodating space in which the plurality of battery cells 1 are accommodated.

In some implementations, the above battery module may be further assembled into a battery pack. The number of battery modules contained in the battery pack may be adjusted according to application and capacity of the battery pack.

Referring to FIG. 13 or FIG. 14 (FIG. 13 and FIG. 14 show a battery pack 3 as an example), a battery case and a plurality of battery modules 2 disposed in the battery case may be included in the battery pack 3. The battery case may include an upper case body 4 and a lower case body 5, the upper case body 4 being capable of covering the lower case body 5 and forming a closed space for accommodating the battery module 2. The plurality of battery modules 2 may be arranged in any manner in the battery case.

In some implementations, the battery may include a first battery cell component and at least two second battery cell components, the first battery cell component includes at least one battery cell 1 according to the first aspect of the present application, the second battery cell component includes at least two second battery cells, the at least two second battery cells are separately disposed on two sides of the first battery cell component in the thickness direction of the first battery cell component, and the thickness direction of the first battery cell component is the same as the thickness direction of the battery cell 1. Optionally, the battery cell according to the first aspect of the present application is a prismatic battery cell with a wound electrode component. By combining a prismatic casing, the wound electrode component, and the elastic buffer pad, the problem of non-uniform stress distribution on the electrode sheet in a prismatic wound battery can be alleviated, and stability of the battery cell can be improved. The battery may be a battery module or a battery pack. For example, with the length direction of the first battery cell component as a row and the thickness direction of the first battery cell component as a column, in the battery module or the battery pack, the first battery cell component may include a plurality of battery cells 1 arranged in rows and/or columns, and/or a plurality of second battery cells arranged in rows and/or columns may be independently disposed on two sides of the first battery cell component in the thickness direction thereof. Optionally, at least two second battery cells may be symmetrically arranged on two sides of the first battery cell component in the thickness direction of the first battery cell component. Further optionally, in the battery module or the battery pack, a quantity proportion of the battery cell 1 may be 30% to 70% based on the total quantity of the battery cell 1 and the second battery cell. A battery generally includes a plurality of battery cells, and a stacking manner of the plurality of battery cells includes stacking in the thickness direction of the battery cells. In the thickness direction of the battery cells, a battery cell located in the middle of the battery is generally a part that expands the most severely and has the greatest expansion force during use. By disposing the first elastic buffer pad only in a first battery cell located in the middle, and not providing the elastic buffer pad in the second battery cells located on two sides of the first battery cell component in the thickness direction, it is not only beneficial to absorb volume expansion of the battery cell that expands more severely and has greater expansion force in the battery, reduce an expansion force of the battery cell in the middle of the battery, and improve volume stability of the battery, but also beneficial to alleviate the problem that the battery cell located in the middle of the battery generates stress concentration due to volume expansion of the battery cells in the later period of use of the battery, which causes lithium precipitation and a rapid decline in capacity of the battery cell in the middle. In addition, high energy density of the battery can also be balanced.

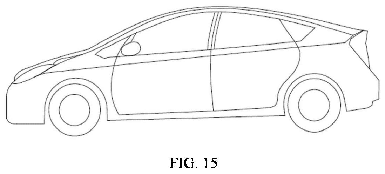

In addition, the present application further provides an electrical apparatus, including: the battery according to the second aspect of the present application. The battery, for example, the battery cell, the battery module or the battery pack may be used as a power supply or an energy storage unit of the electrical apparatus. The electrical apparatus may include, but is not limited to, a mobile device (e.g., a mobile phone or a notebook computer), an electric vehicle (e.g., a battery electric vehicle, a hybrid electric vehicle, a plug-in hybrid electric vehicle, an electric bicycle, an electric scooter, an electric golf cart, or an electric truck), an electric train, ship, or satellite, or an energy storage system. Referring to FIG. 15 for understanding, as a specific example, the electrical apparatus may be a vehicle. For the electrical apparatus, the specific type of the battery may be selected according to its use requirements, for example, the battery cell, the battery module or the battery pack may be selected.

As an example, the electrical apparatus is a pure electric vehicle, a hybrid electric vehicle, or a plug-in hybrid electric vehicle. In order to meet the demand for high power and high energy density of a battery by the electric apparatus, a battery pack or a battery module may be used.

As another example, the electrical apparatus may be a mobile phone, a tablet computer, and a notebook computer. Generally, the electrical apparatus is light and thin, and may use a battery as a power supply.

Embodiments of the present application are described below. The embodiments described below are illustrative only and are not to be construed as limiting the present application. In the embodiments, specific techniques or conditions are not indicated, and they are performed according to techniques or conditions described in documents in the art or according to the specification of the product. The reagents or instruments used without specifying the manufacturer(s) are conventional products that are commercially available.

**Embodiment 1**

(I) Preparation of a lithium secondary battery

(1) Preparation of a positive electrode sheet

The positive electrode active substance $LiNi_{0.6}Co_{0.01}Mn_{0.3}O_2$, the conductive agent Super P, and the binder PVDF were mixed in a weight ratio of 96:2:2, the solvent N-methylpyrrolidone was added, and the mixture was thoroughly stirred and uniformly mixed to obtain a positive electrode slurry. Then the positive electrode slurry was coated on two surfaces of a positive electrode current collector aluminum foil with a thickness of 13 $\mu$m, the coating surface density of the positive electrode slurry on a single side of the aluminum foil was 20 mg/cm$^2$, and then the positive electrode sheet was obtained after drying and cold pressing.

(2) Preparation of a negative electrode sheet

The negative electrode active substance artificial graphite, the conductive agent Super P, the binder styrene-butadiene rubber, and the thickener sodium carboxymethyl cellulose were mixed in a weight ratio of 96:0.5:2:1.5, the solvent deionized water was added, and the mixture was thoroughly stirred and uniformly mixed to obtain a negative electrode slurry. Then the negative electrode slurry was coated on two surfaces of a negative electrode current collector copper foil with a thickness of 6 $\mu$m, the coating thickness of the negative electrode slurry on a single side of the copper foil was 100 $\mu$m, and the coating surface density of the negative electrode slurry on a single side of the copper foil was 11 mg/cm$^2$, and then the negative electrode sheet was obtained after drying and cold pressing.

(3) Preparation of an electrolyte solution

In an argon atmosphere glove box with a water content of < 10 ppm, solvents EC (ethylene carbonate), PC (propylene carbonate) and DMC (dimethyl carbonate) were mixed in a ratio of 1:1:1. Then thoroughly dried lithium salt $LiPF_6$ was dissolved in the foregoing mixed organic solvent, and uniformly stirred to obtain the electrolyte solution, where the concentration of $LiPF_6$ was 1 mol/L.

(4) Preparation of a separator

A polyethylene porous film with a thickness of 7 $\mu$m was used as the separator.

(5) Preparation of an elastic buffer pad

Polypropylene with a thickness of 3 mm in a free state was used as an elastic buffer layer.

(6) Preparation of a lithium secondary battery

The positive electrode sheet, the separator, and the negative electrode sheet were stacked in sequence, with the separator located between the positive electrode sheet and the negative electrode sheet to play a separation action; and the positive electrode sheet, the separator, and the negative electrode sheet were wound and molded to obtain an electrode component. Two electrode components and an elastic buffer pad were arranged in a battery casing (the distance $d_0$ between two inner wall surfaces disposed opposite to each other in the thickness direction thereof was 60 mm), and a layer of elastic buffer pad was sandwiched between the two electrode components. The prepared electrolyte solution was injected and an encapsulation was performed to obtain a lithium-ion lithium secondary battery.

**Embodiments 2 to 22 and Comparative Example 1 to 7**

The differences between embodiments 2 to 22 and embodiment 1 and between comparative example 7 and embodiment 1 are detailed in Table 1, where the elastic buffer pads in embodiments 1 to 22 and comparative examples 1 to 7 are all porous structures, and the difference in compression ratios of the elastic buffer pads with the same material under the same stress was caused by the difference in porosities and pore diameters of the elastic buffer pads.

(II) Battery test method

(a) Testing sizes of the battery and the electrode component and the compression ratio of the elastic buffer pad

Two sets of parallel samples of secondary batteries were taken, and after being left to stand at 25°C for 5 minutes, the two sets of secondary batteries were charged to 4.4 V at a constant current of 0.33 C, then charged to 0.05 C at a constant voltage of 4.4 V, and was left to stand for 5 minutes. One set of secondary batteries was disassembled to obtain the electrode component. After cleaning and drying the electrode component, the thickness of the electrode component and the length $L_1$ and the height $h_1$ of the electrode component were tested (the length and the height of the electrode component were respectively matched with the length direction and the height direction of the casing of the secondary battery; note: Lengths of the cylindrical battery electrode component and the secondary battery was measured in terms of perimeter); and the other set of secondary batteries was discharged at a constant current of 0.33 C to 2.8 V, left to stand for 5 minutes, and then the secondary batteries were disassembled to obtain the electrode component. After cleaning and drying the electrode component, the thickness of the electrode component was measured. The test method was as follows: The electrode component was arranged between two parallel flat plates, a pressure of 0.1 MPa was applied to the electrode component by using the flat plates, and the thickness of the electrode component was obtained by measuring the distance between the flat plates. The total thickness $d_1$ of the electrode component in the fully-charged state and the total thickness $d_2$ of the electrode component in the fully-discharged state in the secondary battery were calculated.

The thickness of the elastic buffer pad in the free state was measured by using a Mitutoyo 1D-C112MX micrometer thickness gauge under a test force of less than or equal to 1.8 N. A plurality of points (such as 5 or 10) were randomly measured and averaged to calculate the total thickness d of the elastic buffer pad in the free state in the secondary battery. The length $L_2$ and the height $h_2$ of the elastic buffer pad were also measured (the length and the height of the elastic buffer pad were respectively matched with the length direction and the height direction of the electrode component). The elastic buffer pad was disposed between two parallel flat plates, and the flat plates were used to separately apply a pressure of 0.1 MPa and a pressure of 0.5 MPa to the elastic buffer pad, and the thickness of the electrode component under compressive stress was obtained by measuring the distance between the flat plates. The compression ratio of the elastic buffer pad in the thickness thereof under compressive stress was the ratio of the thickness change of the elastic buffer pad in the free state and in the compressive stress state to the thickness of the elastic buffer pad in the free state multiplied by 100%.

(b) Testing the capacity retention ratio of the secondary battery

A plurality of parallel samples of secondary batteries were taken, after being left to stand at 25°C for 5 minutes, the secondary batteries were charged to 4.4 V at a constant current of 0.5 C, then charged to 0.05 C at a constant voltage of 4.4 V, and left to stand for 5 minutes. Afterwards, the secondary batteries were discharged to 2.8 V at a constant current of 0.33 C, left to stand for 5 minutes, and the discharge capacity $C_0$ was recorded. The foregoing operation was repeated, and the battery capacity retention ratio was calculated by using the following formula: Capacity retention ratio of secondary battery after n cycles (%) = $C_n/C_0 \times 100\%$. The battery capacity retention ratio after n cycles was recorded.

(c) Battery cell expansion force test

After being left to stand at 25°C for 5 minutes, the secondary battery was charged at a constant current of 0.5 C to 4.4 V, then charged at a constant voltage of 4.4 V to 0.05 C, and left to stand for 5 minutes. Afterwards, the secondary battery was discharged at a constant current of 0.33 C to 2.8 V and left to stand for 5 minutes. Six pressure sensors were disposed at different positions on one side of the secondary battery in the thickness direction. The secondary battery was charged at a constant current of 0.5 C to 4.4 V, then charged at a constant voltage of 4.4 V to 0.05 C, and left to stand for 5 minutes. Expansion forces displayed by the pressure sensors at different positions of the secondary battery in the fully-charged state were recorded, the average value of expansion forces in different charging states were calculated, and the range of the change ratio of the expansion forces in different charging states relative to the average value was calculated based on the average value.

(d) Lithium precipitation and rapid decline in capacity test

After being left to stand at 25°C for 5 minutes, the secondary battery was charged at a constant current of 0.5 C to 4.4 V, then charged at a constant voltage of 4.4 V to 0.05 C, and left to stand for 5 minutes. Afterwards, the secondary battery was discharged at a constant current of 0.33 C to 2.8 V and left to stand for 5 minutes. The foregoing charge-discharge cycle was repeated until the capacity of the secondary battery shows a significant decline. After the charge-discharge cycle test was completed, the secondary battery was disassembled to observe whether lithium precipitation occurred on the negative electrode sheet.

Related tests were performed on Examples 1 to 20 and Comparative Examples 1 to 7, and the test results were detailed in Table 2.

Table 1 Differences between embodiments 1 to 20 and comparative examples 1 to 7

| | Battery type | Negative electrode active material | $d_1$ /mm | $d_2$ /mm | $d_0$ /mm | $d$ /mm | Material of elastic buffer pad | Quantity of elastic buffer pads | Arrangement position of elastic buffer pad | P (=$d_1$-$d_2$/$d_0$) | Compression ratio under pressure of 0.1 MPa | Compression ratio under pressure of 0.5 MPa |
|---|---|---|---|---|---|---|---|---|---|---|---|---|
| Embodiment 1 | Square | Graphite | 57 | 54 | 60 | 3 | Polypropylene | 1 | Between two electrode components | 5.0% | 15.0% | 60.0% |
| Comparative Example 1 | Square | Graphite | 57 | 54 | 60 | 3 | Melamine | 1 | Between two electrode components | 5.0% | 30.0% | 55.0% |
| Comparative Example 2 | Square | Graphite | 57 | 54 | 60 | 3 | Silica gel | 1 | Between two electrode components | 5.0% | 18.0% | 70.0% |
| Comparative Example 3 | Square | Graphite | 57 | 54 | 60 | 3 | Silica gel | 1 | Between two electrode components | 5.0% | 25.0% | 75.0% |
| Embodiment 2 | Square | Graphite | 57 | 54 | 60 | 3 | Polypropylene | 1 | Between two electrode components | 5.0% | 20.0% | 55.0% |
| Embodiment 3 | Square | Graphite | 57 | 54.5 | 60 | 3 | Polypropylene | 1 | Between two electrode components | 4.2% | 12.5% | 51.0% |
| Comparative Example 4 | Square | Graphite | 57 | 54.5 | 60 | 3 | Melamine | 1 | Between two electrode components | 4.2% | 30.0% | 55.0% |
| Comparative Example 5 | Square | Graphite | 57 | 54.5 | 60 | 3 | Silica gel | 1 | Between two electrode components | 4.2% | 18.0% | 70.0% |
| Comparative Example 6 | Square | Graphite | 57 | 54.5 | 60 | 3 | Silica gel | 1 | Between two electrode components | 4.2% | 25.0% | 75.0% |
| Embodiment 4 | Square | Graphite | 57 | 54.5 | 60 | 3 | Polypropylene | 1 | Between two electrode components | 4.2% | 10.0% | 45.0% |

| | Battery type | Negative electrode active material | d₁ /mm | d₂ /mm | d₀ /mm | d /mm | Material of elastic buffer pad | Quantity of elastic buffer pads | Arrangement position of elastic buffer pad | P (=d₁-d₂/d₀) | Compression ratio under pressure of 0.1 MPa | Compression ratio under pressure of 0.5 MPa |
|---|---|---|---|---|---|---|---|---|---|---|---|---|
| Embodiment 5 | Square | Graphite | 57 | 55 | 60 | 3 | Polypropylene | 1 | Between two electrode components | 3.3% | 10.0% | 45.0% |
| Embodiment 6 | Square | Graphite | 57 | 53.7 | 60 | 3 | Polypropylene | 1 | Between two electrode components | 5.5% | / | 50.0% |
| Comparative Example 7 | Square | Graphite | 57 | 53.7 | 60 | 3 | Polypropylene | 1 | Between two electrode components | 5.5% | / | 40.0% |
| Embodiment 7 | Square | Graphite | 57 | 53.7 | 60 | 3 | Polypropylene | 1 | Between two electrode components | 5.5% | 15.0% | 60.0% |
| Embodiment 8 | Square | Graphite | 57 | 53.7 | 60 | 3 | Silica gel | 1 | Between two electrode components | 5.5% | 18.0% | 70.0% |
| Embodiment 9 | Square | Graphite 95 wt% + silicon carbon 5 wt% | 57 | 52.98 | 60 | 3 | Silica gel | 1 | Between two electrode components | 6.7% | 18.0% | 70.0% |
| Embodiment 10 | Square | Graphite 95 wt% + silicon carbon 5 wt% | 57 | 52.98 | 60 | 6 | Silica gel | 1 | Between two electrode components | 6.7% | 18.0% | 70.0% |
| Embodiment 11 | Square | Graphite 95 wt% + silicon carbon 5 wt% | 57 | 52.98 | 60 | 1.2 | Silica gel | 1 | Between two electrode components | 6.7% | 18.0% | 70.0% |

(continued)

| | Battery type | Negative electrode active material | $d_1$ /mm | $d_2$ /mm | $d_0$ /mm | d /mm | Material of elastic buffer pad | Quantity of elastic buffer pads | Arrangement position of elastic buffer pad | P (=$d_1$-$d_2$/$d_0$) | Compression ratio under pressure of 0.1 MPa | Compression ratio under pressure of 0.5 MPa |
|---|---|---|---|---|---|---|---|---|---|---|---|---|
| Embodiment 12 | Square | Graphite 95 wt% + silicon carbon 5 wt% | 57 | 52.98 | 60 | 4.2 | Silica gel | 1 | Between two electrode components | 6.7% | 18.0% | 70.0% |
| Embodiment 13 | Square | Graphite 94 wt% + silicon carbon 6 wt% | 54 | 49.92 | 60 | 9 | Silica gel | 1 | Between two electrode components | 6.8% | 18.0% | 70.0% |
| Embodiment 14 | Square | Graphite 95 wt% + silicon carbon 5 wt% | 57 | 52.98 | 60 | 6 | Silica gel | 2 | Respectively disposed on two sides of two electrode components according to the thickness ratio of 3/3 | 6.7% | 18.0% | 70.0% |
| Embodiment 15 | Square | Graphite 95 wt% + silicon carbon 5 wt% | 57 | 52.98 | 60 | 6 | Silica gel | 3 | Respectively disposed on two sides and in the middle of the electrode components according to the thickness ratio of 1.5/3/1.5 | 6.7% | 18.0% | 70.0% |
| Embodiment 16 | Square | Graphite | 57 | 53.7 | 60 | 3 | Polypropylene | 1 | Between two electrode components | 5.5% | / | 50.0% |
| Embodiment 17 | Square | Graphite | 57 | 53.7 | 60 | 3 | Polypropylene | 1 | Between two electrode components | 5.5% | / | 50.0% |

| | Battery type | Negative electrode active material | $d_1$ /mm | $d_2$ /mm | $d_0$ /mm | d /mm | Material of elastic buffer pad | Quantity of elastic buffer pads | Arrangement position of elastic buffer pad | P (=$d_1$-$d_2$/$d_0$) | Compression ratio under pressure of 0.1 MPa | Compression ratio under pressure of 0.5 MPa |
|---|---|---|---|---|---|---|---|---|---|---|---|---|
| Embodiment 18 | Square | Graphite | 57 | 53.7 | 60 | 3 | Polypropylene | 1 | Between two electrode components | 5.5% | / | 50.0% |
| Embodiment 19 | Cylindrical | Graphite | 33.48 | 31.8 | 36 | 1.8 | Polypropylene | 1 | Between electrode component and casing | 4.7% | 12.5% | 51.0% |
| Embodiment 20 | Cylindrical | Graphite | 33.48 | 31.4 | 36 | 1.8 | Silica gel | 1 | Between electrode component and casing | 5.8% | 18.0% | 70.0% |

Table 2 Some differences and related test results of embodiments 1 to 20 and comparative examples 1 to 7

| | P (=$d_1$-$d_2$/$d_0$) | Compression ratio under pressure of 0.1 MPa | Compression ratio under pressure of 0.5 MPa | (d + $d_2$)/$d_0$ | (d + $d_1$)/$d_0$ | d/$d_2$ | $L_1$/$L_2$ | $h_1$/$h_2$ | Capacity retention ratio after 500 cycles | Expansion force at different positions of the battery cell after 500 cycles | | Whether lithium precipitation occured on a negative electrode sheet when the capacity of a battery pack was significantly attenuated |
|---|---|---|---|---|---|---|---|---|---|---|---|---|
| | | | | | | | | | | Average value /N | Difference between maximum value and minimum value /N | |
| Embodiment 1 | 5.0% | 15.0% | 60.0% | 95.0% | 100.0% | 6% | 0.9 | 0.9 | 94.0% | 500 | 47 | No |
| Comparative Example 1 | 5.0% | 30.0% | 55.0% | 95.0% | 100.0% | 6% | 0.9 | 0.9 | 90.2% | 400 | 55 | Yes |
| Comparative Example 2 | 5.0% | 18.0% | 70.0% | 95.0% | 100.0% | 6% | 0.9 | 0.9 | 91.1% | 380 | 54 | Yes |
| Comparative Example 3 | 5.0% | 25.0% | 75.0% | 95.0% | 100.0% | 6% | 0.9 | 0.9 | 89.2% | 360 | 60 | Yes |
| Embodiment 2 | 5.0% | 20.0% | 55.0% | 95.0% | 100.0% | 6% | 0.9 | 0.9 | 93.5% | 520 | 48 | No |
| Embodiment 3 | 4.2% | 12.5% | 51.0% | 95.8% | 100.0% | 6% | 0.9 | 0.9 | 94.5% | 550 | 45 | No |
| Comparative Example 4 | 4.2% | 30.0% | 55.0% | 95.8% | 100.0% | 6% | 0.9 | 0.9 | 90.0% | 540 | 56 | Yes |
| Comparative Example 5 | 4.2% | 18.0% | 70.0% | 95.8% | 100.0% | 6% | 0.9 | 0.9 | 90.5% | 380 | 56 | Yes |
| Comparative Example 6 | 4.2% | 25.0% | 75.0% | 95.8% | 100.0% | 6% | 0.9 | 0.9 | 88.3% | 360 | 62 | Yes |
| Embodiment 4 | 4.2% | 10.0% | 45.0% | 95.8% | 100.0% | 6% | 0.9 | 0.9 | 95.0% | 550 | 40 | No |
| Embodiment 5 | 3.3% | 10.0% | 45.0% | 96.7% | 100.0% | 5% | 0.9 | 0.9 | 94.2% | 550 | 35 | No |

| | $P\ (=d_1-d_2/d_0)$ | Compression ratio under pressure of 0.1 MPa | Compression ratio under pressure of 0.5 MPa | $(d+d_2)/d_0$ | $(d+d_1)/d_0$ | $d/d_2$ | $L_1/L_2$ | $h_1/h_2$ | Capacity retention ratio after 500 cycles | Expansion force at different positions of the battery cell after 500 cycles | | Whether lithium precipitation occured on a negative electrode sheet when the capacity of a battery pack was significantly attenuated |
|---|---|---|---|---|---|---|---|---|---|---|---|---|
| | | | | | | | | | | Average value /N | Difference between maximum value and minimum value /N | |
| Embodiment 6 | 5.5% | / | 50.0% | 94.5% | 100.0% | 6% | 0.9 | 0.9 | 92.5% | 550 | 44 | No |
| Comparative Example 7 | 5.5% | / | 40.0% | 94.5% | 100.0% | 6% | 0.9 | 0.9 | 87.4% | 600 | 65 | Yes |
| Embodiment 7 | 5.5% | 15.0% | 60.0% | 94.5% | 100.0% | 6% | 0.9 | 0.9 | 92.9% | 500 | 42 | No |
| Embodiment 8 | 5.5% | 18.0% | 70.0% | 94.5% | 100.0% | 6% | 0.9 | 0.9 | 93.6% | 440 | 40 | No |
| Embodiment 9 | 6.7% | 18.0% | 70.0% | 93.3% | 100.0% | 6% | 0.9 | 0.9 | 93.1% | 440 | 43 | No |
| Embodiment 10 | 6.7% | 18.0% | 70.0% | 98.3% | 105.0% | 11% | 0.9 | 0.9 | 92.3% | 700 | 60 | No |
| Embodiment 11 | 6.7% | 18.0% | 70.0% | 90.3% | 97.0% | 2% | 0.9 | 0.9 | 91.5% | 300 | 45 | No |

EP 4 773 396 A1

24

| | | | | | | | | | | | | |
|---|---|---|---|---|---|---|---|---|---|---|---|---|
| Embodiment 12 | 6.7% | 18.0% | 70.0% | 95.3% | 102.0% | 8% | 0.9 | 0.9 | 91.2% | 600 | 50 | No |
| Embodiment 13 | 6.8% | 18.0% | 70.0% | 98.2% | 105.0% | 18% | 0.9 | 0.9 | 90.5% | 550 | 45 | No |
| Embodiment 14 | 6.7% | 18.0% | 70.0% | 98.3% | 105.0% | 11% | 0.9 | 0.9 | 92.1% | 700 | 58 | No |
| Embodiment 15 | 6.7% | 18.0% | 70.0% | 98.3% | 105.0% | 11% | 0.9 | 0.9 | 92.5% | 700 | 56 | No |
| Embodiment 16 | 5.5% | / | 50.0% | 94.5% | 100.0% | 6% | 0.8 | 0.8 | 91.5% | 550 | 50 | No |
| Embodiment 17 | 5.5% | / | 50.0% | 94.5% | 100.0% | 6% | 1.1 | 1.05 | 92.0% | 550 | 44 | No |
| Embodiment 18 | 5.5% | / | 50.0% | 94.5% | 100.0% | 6% | 0.9 | 1 | 92.8% | 550 | 44 | No |
| Embodiment 19 | 4.7% | 12.5% | 51.0% | 93.3% | 98.0% | 6% | 0.9 | 0.9 | 92.3% | / | / | No |
| Embodiment 20 | 5.8% | 18.0% | 70.0% | 92.2% | 98.0% | 6% | 0.9 | 0.9 | 91.6% | / | / | No |

Conclusion:

It can be learned from embodiments 1 to 20, comparative examples 1 to 7, and Tables 1 to 2 that the solutions of the foregoing embodiments of the present application are beneficial to improving volume stability and uniformity of stress distribution of the battery cell during long-term use, and reducing the risk of expansion and deformation or performance deterioration of the battery cell. Furthermore, for a battery cell with P>5%, an elastic buffer pad with a compression ratio of $\geq$ 60% or $\geq$ 70% under a pressure of 0.5 MPa can further be selected. For a battery cell with -5%$\leq$P$\leq$5%, an elastic buffer pad with a compression ratio of $\leq$ 15% or $\leq$ 10% under a pressure of 0.1 MPa, and/or a compression ratio of $\leq$ 55% or $\leq$ 50% under a pressure of 0.5 MPa can further be selected. In addition, by further regulating the ratio of the sum of the total thickness d of the elastic buffer pad in the free state and the total thickness $d_1(d_2)$ of the electrode component in the fully-charged (fully-discharged) state to the distance $d_0$ between two inner wall surfaces disposed opposite to each other of the casing in the thickness direction thereof, and the size of the elastic buffer pad relative to the electrode component, it is also beneficial to further improving volume stability and uniformity of stress distribution of the battery cell during long-term use, and reduce the risk of expansion and deformation or performance deterioration of the battery cell.

Finally, it should be noted that: the above embodiments are only used to illustrate the technical solutions of the present application, but not to limit them. Although the present application has been described in detail with reference to the foregoing embodiments, those of ordinary skill in the art should understand that: they can still make modifications on the technical solutions described in the aforementioned embodiments or make equivalent replacements on some or all of the technical features; and these modifications or replacements do not make the essence of the corresponding technical solutions depart from the spirit and scope of the technical solutions of the various embodiments of the present application. All such modifications and replacements should fall within the scope of the claims and specification of the present application. In particular, the technical features mentioned in the embodiments may be combined in any manner provided that no structural conflict is present. The present application is not limited to the specific embodiments disclosed herein, but includes all technical solutions falling within the scope of the claims.

**Claims**

1. A battery cell, comprising:

    a casing;
    at least one electrode component, the electrode component being arranged inside the casing; and
    at least one elastic buffer pad, the elastic buffer pad being disposed on at least part of a surface of the electrode component and/or inside the electrode component, and the compression ratio of the elastic buffer pad in the thickness direction thereof satisfying the following relationship:

    -5%$\leq$P$\leq$5%, the compression ratio of the elastic buffer pad under a pressure of 0.1 MPa being $\leq$ 20%, and the compression ratio thereof under a pressure of 0.5 MPa being $\leq$ 60%; or
    P>5%, the compression ratio of the elastic buffer pad under a pressure of 0.5 MPa being $\geq$ 50%; and
    the at least one electrode component and the at least one elastic buffer pad being stacked in a first direction, and P being a ratio of a difference between a total distance of the electrode component in a fully-charged state and a total distance of the electrode component in a fully-discharged state to a distance between the inner wall surfaces of the casing in the first direction.

2. The battery cell according to claim 1, wherein the elastic buffer pad is disposed between the electrode component and the casing, and/or the elastic buffer pad is disposed between two adjacent electrode components.

3. The battery cell according to claim 1 or 2, wherein

   when -5%≤P≤5%, the compression ratio of the elastic buffer pad under the pressure of 0.1 MPa is ≤ 15%, optionally ≤ 10%, and/or the compression ratio of the elastic buffer pad under the pressure of 0.5 MPa is ≤ 55%, optionally ≤ 50%; or
   when P>5%, the compression ratio of the elastic buffer pad under the pressure of 0.5 MPa is ≥ 60%, optionally ≥ 70%.

4. The battery cell according to any one of claims 1 to 3, wherein the electrode component is a wound electrode component and comprises a straight part and a corner part, and the elastic buffer pad is disposed on at least part of the surface of the straight part and/or the corner part.

5. The battery cell according to any one of claims 1 to 4, wherein the battery cell is a prismatic battery cell.

6. The battery cell according to claim 5, wherein the battery cell comprises: at least one first elastic buffer pad and/or at least one second elastic buffer pad, the first elastic buffer pad and the electrode component being stacked in the thickness direction of the battery cell, and/or the second elastic buffer pad and the electrode component being stacked in the length direction of the battery cell.

7. The battery cell according to claim 6, wherein at least one of the following conditions is satisfied:

   in the thickness direction of the battery cell, a sum of a total thickness of the first elastic buffer pad in a free state and a total thickness of the electrode component in a fully-discharged state is 80% to 99% of the distance between the inner wall surfaces of the casing, optionally 85% to 98%, and further optionally 90% to 95%;
   in the thickness direction of the battery cell, a sum of the total thickness of the first elastic buffer pad in the free state and a total thickness of the electrode component in a fully-charged state is 95% to 110% of the distance between the inner wall surfaces of the casing, optionally 98% to 105%, and further optionally 99% to 102%;
   in the length direction of the battery cell, a sum of a total thickness of the second elastic buffer pad in a free state and the length of the electrode component in the fully-discharged state is 80% to 99% of the distance between the inner wall surfaces of the casing, optionally 85% to 98%, and further optionally 90% to 95%; or
   in the length direction of the battery cell, a sum of the total thickness of the second elastic buffer pad in the free state and the length of the electrode component in a fully-charged state is 95% to 110% of the distance between the inner wall surfaces of the casing, optionally 98% to 105%, and further optionally 99% to 102%.

8. The battery cell according to claim 6 or 7, wherein the ratio of the total thickness of the first elastic buffer pad in the free state to the total thickness of the electrode component in the fully-discharged state is 2% to 25%, optionally 5% to 20%, and further optionally 8% to 15%.

9. The battery cell according to any one of claims 6 to 8, wherein the ratio of an extension distance of the first elastic buffer pad in the free state in the length direction of the electrode component to the length of the electrode component is 0.8 to 1.2, optionally 0.85 to 1.1, and further optionally 0.9 to 1.05; and/or
   the ratio of an extension distance of the first elastic buffer pad in the free state in the height direction of the electrode component to the height of the electrode component is 0.8 to 1.2, optionally 0.85 to 1.1, and further optionally 0.9 to 1.05.

10. The battery cell according to any one of claims 6 to 9, wherein the orthographic projection of the first elastic buffer pad on the electrode component is located in a region in which the electrode component is located.

11. The battery cell according to any one of claims 1 to 3, wherein the battery cell is a cylindrical battery cell, the at least one elastic buffer pad and the electrode component are stacked in the radial direction of the electrode component, and the distance between the inner wall surfaces of the casing is equal to the diameter of an inner cavity of the casing.

12. The battery cell according to claim 11, wherein a sum of a total thickness of the elastic buffer pad in a free state and a total thickness of the electrode component in a fully-discharged state is 80% to 99% of the diameter of the inner cavity of the casing, optionally 85% to 98%, and further optionally 90% to 95%; and/or

a sum of the total thickness of the elastic buffer pad in the free state and a total thickness of the electrode component in a fully-charged state is 85% to 110% of the diameter of the inner cavity of the casing, optionally 98% to 105%, and further optionally 99% to 102%.

13. The battery cell according to claim 11 or 12, wherein the elastic buffer pad is disposed between the electrode component and the casing, and the ratio of an extension distance of the elastic buffer pad in the free state in the circumferential direction of the electrode component to the perimeter of the electrode component is 0.8 to 1.2, optionally 0.85 to 1.1, and further optionally 0.9 to 1.05; and/or
the ratio of an extension distance of the elastic buffer pad in the free state in the height direction of the electrode component to the height of the electrode component is 0.8 to 1.2, optionally 0.85 to 1.1, and further optionally 0.9 to 1.05.

14. The battery cell according to claim 13, wherein the extension distance of the elastic buffer pad in the free state in the circumferential direction of the electrode component is less than or equal to the perimeter of the electrode component; and/or the extension distance of the elastic buffer pad in the free state in the height direction of the electrode component is less than or equal to the height of the electrode component.

15. The battery cell according to any one of claims 1 to 14, wherein the thickness of a single elastic buffer pad in the free state is 2% to 15% of the thickness of a single electrode component in the fully-discharged state, optionally 5% to 10%; and/or
the thickness of the single elastic buffer pad in the free state is 0.2 mm to 10.5 mm.

16. A battery, comprising the battery cell according to any one of claims 1 to 15.

17. An electrical apparatus, comprising the battery according to claim 16.

FIG. 1

FIG. 2

FIG. 3

1

FIG. 4

1

FIG. 5

1

FIG. 6

FIG. 7

FIG. 8

FIG. 9

FIG. 10

FIG. 11

FIG. 12

FIG. 13

FIG. 14

FIG. 15

## INTERNATIONAL SEARCH REPORT

| International application No. |
| --- |
| **PCT/CN2023/120510** |

| A. | CLASSIFICATION OF SUBJECT MATTER |
| --- | --- |
| | H01M50/471(2021.01)i; H01M50/489(2021.01)i; H01M10/04(2006.01)i |

According to International Patent Classification (IPC) or to both national classification and IPC

| B. | FIELDS SEARCHED |
| --- | --- |

Minimum documentation searched (classification system followed by classification symbols)

H01M50/-; H01M10/-

Documentation searched other than minimum documentation to the extent that such documents are included in the fields searched

Electronic data base consulted during the international search (name of data base and, where practicable, search terms used)

CNTXT, ENTXTC, CNKI: (变 2d 形), 充电, 膨胀, 电极, 放电, 缓冲, 宁德时代/pa, 压缩率, expand+, compress+, core?, electrod +, flexib+, elastic+

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 217740672 U (CONTEMPORARY AMPEREX TECHNOLOGY CO., LTD.) 04 November 2022 (2022-11-04) description, paragraphs 0053-0164, and figures 1-11 | 1-17 |
| A | CN 115023342 A (ASPEN AEROGELS, INC.) 06 September 2022 (2022-09-06) entire document | 1-17 |
| A | JP 2021168284 A (GS YUASA CORP. et al.) 21 October 2021 (2021-10-21) entire document | 1-17 |
| A | CN 209658292 U (LG CHEMICAL LTD.) 19 November 2019 (2019-11-19) entire document | 1-17 |
| A | CN 215988963 U (CONTEMPORARY AMPEREX TECHNOLOGY CO., LTD.) 08 March 2022 (2022-03-08) entire document | 1-17 |
| A | JP 2020177747 A (YAZAKI CORP.) 29 October 2020 (2020-10-29) entire document | 1-17 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **21 November 2023** | **23 November 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/120510**

| Patent document cited in search report | | | Publication date (day/month/year) | Patent family member(s) | | | Publication date (day/month/year) |
|---|---|---|---|---|---|---|---|
| CN | 217740672 | U | 04 November 2022 | None | | | |
| CN | 115023342 | A | 06 September 2022 | KR | 20220110803 | A | 09 August 2022 |
| | | | | WO | 2021113188 | A1 | 10 June 2021 |
| | | | | TW | 202128594 | A | 01 August 2021 |
| | | | | AU | 2020396858 | A1 | 14 July 2022 |
| | | | | CA | 3160322 | A1 | 10 June 2021 |
| | | | | IL | 293573 | A | 01 August 2022 |
| | | | | EP | 4069508 | A1 | 12 October 2022 |
| | | | | US | 2021167438 | A1 | 03 June 2021 |
| | | | | BR | 112022010804 | A2 | 23 August 2022 |
| | | | | JP | 202306094 | A | 14 February 2023 |
| | | | | IN | 202217035944 | A | 04 November 2022 |
| JP | 2021168284 | A | 21 October 2021 | None | | | |
| CN | 209658292 | U | 19 November 2019 | KR | 20180047173 | A | 10 May 2018 |
| | | | | KR | 102263409 | B1 | 11 June 2021 |
| | | | | WO | 2018080285 | A1 | 03 May 2018 |
| | | | | US | 2019207265 | A1 | 04 July 2019 |
| | | | | US | 11695161 | B2 | 04 July 2023 |
| CN | 215988963 | U | 08 March 2022 | WO | 2023000859 | A1 | 26 January 2023 |
| JP | 2020177747 | A | 29 October 2020 | DE | 102020203335 | A1 | 22 October 2020 |
| | | | | JP | 7083773 | B2 | 13 June 2022 |
| | | | | CN | 111834564 | A | 27 October 2020 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *GB/T 1041-92*